# EUROPEAN PATENT APPLICATION

(11) **EP 4 600 323 A1**
(43) Date of publication of application: **13.08.2025**
(21) Application number: 24875786.6
(22) Date of filing: 28.10.2024
(51) Int. Cl.: C09K 3/18, D06M 15/263, D06M 15/647

(54) **WATER REPELLENT COMPOSITION**

(30) Priority: 01.11.2023 JP 2023187978
(71) Applicant: DAIKIN INDUSTRIES, LTD., Osaka-shi, Osaka 530-0001 (JP)
(72) Inventor: FUKUMOTO, Kanako, Osaka-Shi, Osaka 530-0001 (JP); IOKI, Masato, Osaka-Shi, Osaka 530-0001 (JP); HORIKAWA, Nozomi, Osaka-Shi, Osaka 530-0001 (JP); TSUKADA, Hiroto, Osaka-Shi, Osaka 530-0001 (JP)
(74) Representative: Hoffmann Eitle
(86) International application number: PCT/JP2024/038391
(87) International publication number: WO 2025/094901

(57) **Abstract**

A water-repellent composition comprising:
a polymer (A),
a polyether-modified polydimethylsiloxane (B), and
an aqueous medium (C), wherein
the polymer (A) is a polymer comprising a repeating unit derived from a monomer (a1) represented by the following formula:

CH₂=C(-R¹¹)-C(=O)-O-R¹²

wherein R¹¹ is a hydrogen atom or a methyl group, and R¹² is a hydrocarbon group having 9 to 40 carbon atoms.

## Description

### Technical Field

The present disclosure relates to a water-repellent composition.

### Background Art

Development of non-fluorine-based water-repellent agents for imparting water-repellency to a substrate (particularly textile products) has been pursued. As an example, treating fabric with a composition comprising a blend of a non-fluorine-based acrylate copolymer and a polyether-modified polydimethylsiloxane at high concentrations has been known to enable providing excellent oil-repellency.

### Citation List

### Patent Literature

Patent Literature 1: WO 2022/145147
Patent Literature 2: WO 2021/132172
Patent Literature 3: JP 2020-189980 A

### Summary of Invention

### Technical Problem

In order to be used as a water-repellent agent, the above composition lacks water-repellency. Furthermore, when a conventional non-fluorine-based repellent is used in textile products, the slip resistance and chalk mark resistance are insufficient, as a result of which the reliability of the textile product may be reduced.

An object of the present disclosure is to provide a water-repellent composition capable of imparting favorable water-repellency, slip resistance, and chalk mark resistance to a textile product.

### Solution to Problem

The present disclosure includes the following aspects:
[1] A water-repellent composition comprising:
   a polymer (A),
   a polyether-modified polydimethylsiloxane (B), and
   an aqueous medium (C), wherein
   the polymer (A) is a polymer comprising a repeating unit derived from a monomer (a1) represented by the following formula:

      CH₂=C(-R¹¹)-C(=O)-O-R¹²

      wherein R¹¹ is a hydrogen atom or a methyl group, and R¹² is a hydrocarbon group having 9 to 40 carbon atoms.
[2] The water-repellent composition according to item 1, wherein in the monomer (a1), R¹² is a hydrocarbon group having 10 to 30 carbon atoms.
[3] The water-repellent composition according to item 2, wherein the polymer (A) comprises a repeating unit derived from stearyl acrylate as the monomer (a1).
[4] The water-repellent composition according to any one of items 1 to 3, wherein the polymer (A) a copolymer comprising a repeating unit derived from the monomer (a1) and a repeating unit derived from a monomer (a2) different from the monomer (a1).
[5] The water-repellent composition according to item 4, wherein the polymer (A) comprises a repeating unit derived from stearyl acrylate as the monomer (a1) and a repeating unit derived from a stearyl group-containing amide acrylate as the monomer (a2).
[6] The water-repellent composition according to item 4, wherein the polymer (A) comprises a repeating unit derived from stearyl acrylate as the monomer (a1) and a repeating unit derived from vinyl chloride as the monomer (a2).
[7] The water-repellent composition according to item 4, wherein the polymer (A) comprises a repeating unit derived from stearyl acrylate as the monomer (a1), and a repeating unit derived from a stearyl group-containing amide acrylate and a repeating unit derived from vinyl chloride as the monomer (a2).
[8] The water-repellent composition according to any one of items 1 to 7, comprising 0.10 to 30 parts by mass of the polyether-modified polydimethylsiloxane (B) per 100 parts by mass of the polymer (A).
[9] The water-repellent composition according to any one of items 1 to 8, wherein the polyether-modified polydimethylsiloxane (B) comprises at least one constituent unit based on ethylene oxide or propylene oxide.
[10] The water-repellent composition according to any one of items 1 to 9, further comprising a surfactant.
[11] The water-repellent composition according to item 10, wherein the surfactant comprises a nonionic surfactant.
[12] A method for producing the water-repellent composition according to any one of items 1 to 11, comprising reacting the monomer (a1) in the aqueous medium (C) containing the monomer (a1) and the polyether-modified polydimethylsiloxane (B) to obtain the polymer (A).
[13] A method for producing the water-repellent composition according to any one of items 4 to 11, comprising reacting the monomer (a1) with the monomer (a2) in the aqueous medium (C) containing the monomer (a1), the monomer (a2), and the polyether-modified polydimethylsiloxane (B) to obtain the polymer (A).
[14] A method for producing a textile product, comprising applying the water-repellent composition according to any one of items 1 to 11 to a fibrous substrate.
[15] The method for producing a textile product according to item 14, comprising, before applying the water-repellent composition to the fibrous substrate, imparting to fibers one or more functional groups selected from the group consisting of
   a monovalent group represented by -SO₃M¹, wherein M¹ represents a monovalent cation,
   a monovalent group represented by -COOM², wherein M² represents a monovalent cation, and
   a monovalent group represented by -O-P(O)(OX¹)(OX²), wherein X¹ and X² each independently represent a hydrogen atom or an alkyl group having 1 to 22 carbon atoms.
[16] A textile product to which the polymer (A) and the polyether-modified polydimethylsiloxane (B) in the water-repellent composition according to any one of items 1 to 11 are adhered.
[17] The textile product according to item 16, to which a compound having one or more functional groups selected from the group consisting of
   a monovalent group represented by -SO₃M¹, wherein M¹ represents a monovalent cation,
   a monovalent group represented by -COOM², wherein M² represents a monovalent cation, and
   a monovalent group represented by -O-P(O)(OX¹)(OX²), wherein X¹ and X² each independently represent a hydrogen atom or an alkyl group having 1 to 22 carbon atoms, is adhered.

### Advantageous Effects of Invention

The water-repellent composition in the present disclosure can impart favorable water-repellency, slip resistance and chalk mark resistance to a textile product.

### Description of Embodiments

### <Definition of Terms>

As used herein, the "n valent group" means a group having n bonds, i.e., a group forming n bonds. Also, the "n valent organic group" means a n valent group containing carbon. Such an organic group is not limited, but can be a hydrocarbon group or a derivatives thereof. The derivative of the hydrocarbon group means a group that has one or more of, for example, N, O, S, Si, or an amide, sulfonyl, siloxane, carbonyl, carbonyloxy, or halogen at an end or in a molecular chain of the hydrocarbon group.

As used herein, the "hydrocarbon group" means a group containing carbon and hydrogen, the group obtained by having removed hydrogen atoms from the hydrocarbon. Such a hydrocarbon group is not limited, but examples thereof include C₁₋₂₀ hydrocarbon groups, such as an aliphatic hydrocarbon group and an aromatic hydrocarbon group. The above-described "aliphatic hydrocarbon group" may be linear, branched, or cyclic, and may be either saturated or unsaturated. The hydrocarbon group may contain one or more ring structures. The hydrocarbon group may be substituted with one or more substituents.

The chemical structures described herein should be understood not to encompass a chemical structure that would be recognized by a person skilled in the art as being chemically impossible or extremely unstable.

### <Water-Repellent Composition>

The composition of the present disclosure will be described below.

The water-repellent composition may further contain other components (silicone, wax, an organic acid, a surfactant, an organic solvent, etc.).

### {Polymer (A)}

The polymer (A) is preferably free of fluorine atoms.

### (Monomer (a1))

The polymer (A) includes a repeating unit derived from a monomer (a1) represented by the following formula:

CH₂=C(-R^{A1})-C(=O)-O-R^{A2}

wherein R^{A1} is a hydrogen atom or a methyl group,
R^{A2} is a hydrocarbon group having 9 to 40 carbon atoms. The polymer (A) may further contain one or two or more of other monomers (a2).

R^{A1} is a hydrogen atom or a methyl group.

R^{A2} is a hydrocarbon group having 9 to 40 carbon atoms. The hydrocarbon group is preferably an aliphatic hydrocarbon group, particularly a saturated aliphatic hydrocarbon group, and in particular an alkyl group. The -CH₃ group has a lower surface free energy than -CH₂- and is more likely to exhibit a liquid-repellency. For this reason, a structure with many branches and many -CH₃ groups is preferred. A long chain alkyl group of a certain length, on the other hand, exhibits a high liquid-repellency derived for its crystallinity.

R^{A2} may be linear or branched. In one aspect, R^{A2} is linear. In another aspect, R^{A2} is branched.

R²² is more preferably an aliphatic hydrocarbon group, in particular a saturated aliphatic hydrocarbon group (i.e., an alkyl group). The number of carbon atoms in the hydrocarbon group is 9 to 40. The lower limit of the number of carbon atoms in the hydrocarbon group may be 9, 10, 11, 12, 15, or 20. The upper limit of the number of carbon atoms in the hydrocarbon group may be 40, 35, 32, 30, 28, 26, 25, or 24. The number of carbon atoms in the hydrocarbon group may be, for example, 9 to 35, 10 to 35, 10 to 30, 15 to 25, or the like.

R^{A2} is preferably free of a reactive group or a hydrophilic group. Examples of the reactive groups are an epoxy group, a chloromethyl group, a bromomethyl group, an iodomethyl group, an isocyanate group, and a blocked isocyanate group. Examples of the hydrophilic groups are a hydroxyl group, a polyalkylene oxide group, an amino group, a carboxylic acid group, a sulfonic acid group, a phosphoric acid group, alkali metal or alkaline earth metal salt groups of carboxylic acid, sulfonic acid, and phosphoric acid, ammonium salt groups in which a chloride, bromide, or iodide ion is a counter anion, other ionic groups, etc. Herein, the reactive group and hydrophilic group may be overlapped with each other.

Preferred specific examples of the monomer (a1) include stearyl (meth)acrylate, isostearyl (meth)acrylate, decyl (meth)acrylate, isodecyl (meth)acrylate, nonyl (meth)acrylate, isononyl (meth)acrylate, lauryl (meth)acrylate, icosyl (meth)acrylate, behenyl (meth)acrylate, and the like.

In a preferred aspect, the polymer (A) contains a repeating unit derived from stearyl acrylate as the monomer (a1) .

The polymer (A) may be a copolymer containing repeating units derived from the monomer (a2) different from the monomer (a1). Examples of the monomers (a2) will be described below.

### (Monomer (a2))

The monomer (a2) may be a hydrophobic monomer (a21).

### (Hydrophobic Monomer (a21))

The hydrophobic monomer (a21) has one ethylenically unsaturated double bond and a hydrocarbon group having 2 to 40 carbon atoms.

The hydrophobic monomer (a21) may have at least one hydrocarbon group having 2 to 40 carbon atoms. The hydrocarbon group is preferably an aliphatic hydrocarbon group, in particular a saturated aliphatic hydrocarbon group (an alkyl group). The hydrocarbon group may be linear or branched. The number of carbon atoms of the hydrocarbon group may be 2 or more, 3 or more, 4 or more, 6 or more, 8 or more, 10 or more, 11 or more, 12 or more, 14 or more, or 16 or more and preferably 6 or more. The number of carbon atoms of the hydrocarbon group may be 40 or less, 30 or less, 25 or less, 22 or less, or 20 or less and preferably 30 or less.

Hydrophobic monomer (a21) may be a monomer represented by the formula:

CH₂=C(-R³²)-C(=O)-Y³¹-(R³¹)ₖ

wherein
R³¹ is a hydrocarbon group having 2 to 40 carbon atoms,
R³² is a hydrogen atom, a monovalent organic group or a halogen atom,
Y³¹ is a divalent to tetravalent group composed of at least one selected from a direct bond, a divalent to tetravalent hydrocarbon group having one carbon atom, -C₆H₄-, -O-, - C(=O)-, -S(=O)₂- and -NR'- wherein R' is a hydrogen atom or a hydrocarbon group having 1 to 4 carbon atoms, and
k is an integer of 1 to 3.

R³¹ is preferably a branched or linear (preferably long linear chain) hydrocarbon group. The hydrocarbon group is preferably an aliphatic hydrocarbon group, particularly a saturated aliphatic hydrocarbon group (alkyl group). The - CH₃ group has a lower surface free energy than -CH₂- and is more likely to exhibit a liquid-repellency. For this reason, a structure with many branches and many -CH₃ groups is preferable. Also, a long-chain alkyl group of a certain length, on the other hand, exhibits high liquid-repellency due to its crystallinity. Therefore, it can be a branched hydrocarbon group (for example, a branched alkyl group), particularly a t-butyl group or isopropyl group, a group with a multi-branched structure, or a long chain hydrocarbon group (or a long linear hydrocarbon group), for example, an alkyl group. The number of carbon atoms of R³¹ may be 2 or more, 3 or more, 4 or more, 6 or more, 8 or more, 10 or more, 11 or more, 12 or more, 14 or more, 16 or more, or 18 or more, and is preferably 10 or more. The number of carbon atoms of R³¹ may be 40 or less, 30 or less, 25 or less, 20 or less, 15 or less, or 12 or less.

k is 1, 2 or 3. k = 3 when Y³¹ has a tetravalent hydrocarbon group having one carbon atom, for example. k = 2 when Y³¹ has a trivalent hydrocarbon group having one carbon atom, for example. k = 1 when Y³¹ has no trivalent or tetravalent hydrocarbon groups having one carbon atom (for example, when Y³¹ has a divalent hydrocarbon group having one carbon atom (-CH₂-) (for example, 1 to 6 such groups)).

R³² may be a hydrogen atom, methyl group, halogen atom, substituted or unsubstituted benzyl group, substituted or unsubstituted phenyl group. Examples of R³² are a hydrogen atom, methyl group, chlorine atom, bromine atom, iodine atom, and cyano group. R³² is preferably a hydrogen atom, methyl group, and chlorine atom. R³² is more preferably a methyl group. When R³² is a methyl group, a higher liquid-repellency can be obtained. R³² may be a hydrogen atom in view of particularly its reactivity.

Y³¹ is preferably a divalent group. Examples of divalent to tetravalent hydrocarbon groups having one carbon atom are -CH₂-, -CH= with a branched structure and -C= with a branched structure.

Y³¹ may be -Y'-, -Y'-Y'-, -Y'-C(=O)-, -C(=O)-Y'-, -Y'-C(=O)-Y'-, -Y'-X'-, -Y'-X'-Y'-, -Y'-X'-Y'-C(=O)-, -Y'-X'-C(=O)-Y'-, -Y' -X'-Y'-C(=O)-Y'-, or -Y'-X'-Y'-X'- wherein, Y' is each independently a direct bond, -O-, -NR'- (where R' is a hydrogen atom or a hydrocarbon group having 1 to 4 carbon atoms) or -S(=O)₂-, and X' is -(CH₂)ₘ- (where m is an integer of 1 to 5), a linear hydrocarbon group having an unsaturated bond having 1 to 5 carbon atoms, a hydrocarbon group having a branched structure having 1 to 5 carbon atoms, or -(CH₂)₁-C₆H₄-(CH₂)ₗ- (where 1 is each independently an integer of 0 to 5, and -C₆H₄- is a phenylene group). It is preferable that Y³¹ should not be a divalent hydrocarbon group singly.

Specific examples of Y³¹ are -O-, -NH-, -O-C(=O)-, -NH-C(=O)-, -O-C (=O) -NH-, -NH-C (=O) -O-, -NH-C (=O) -NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C (=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -O-(CH₂)ₘ-NH-S(=O)2-, -O-(CH₂)ₘ-S(=O)₂-NH-, -NH-(CH₂)ₘ-NH-S(=O)₂-, -NH-(CH₂)ₘ-S(=O)₂-NH-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, or -NH-(CH₂)ₘ-NH-C₆H₄-, wherein m is an integer of 1 to 5 and particularly 2 or 4.

Y³¹ is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂- or -O-(CH₂)ₘ-S(=O)₂-NH-, -NH-(CH₂)ₘ-O-C(=O)-, -NH-(CH₂)ₘ-NH-C(=O)-, -NH-(CH₂)ₘ-O-C (=O)-NH-, -NH-(CH₂)ₘ-NH-C(=O)-O-, or -NH-(CH₂)ₘ-NH-C (=O) -NH-, wherein m is an integer of 1 to 5 and particularly 2 or 4. Y³¹ is more preferably -O-, -O-(CH₂)ₘ-O-C(=O)-NH-, - O-(CH₂)ₘ-NH-C(=O)-O- or -O-(CH₂)ₘ-NH-C(=O)-, -O-(CH₂)ₘ-NH-S(=O)₂- or -O-(CH₂)ₘ-S(=O)₂-NH-, and particularly preferably -O- (CH₂)ₘ-NH-C(=O)-.

Hydrophobic monomer (a21) is preferably free of a reactive group or hydrophilic group. Examples of the reactive groups are an epoxy group, chloromethyl group, bromomethyl group, iodomethyl group, isocyanate group, and block isocyanate group. Examples of the hydrophilic groups are a hydroxyl group, polyalkylene oxide group, amino group, carboxylic acid group, sulfonic acid group, phosphoric acid group, alkali metal or alkaline earth metal salt groups of carboxylic acid, sulfonic acid, or phosphoric acid, ammonium salt groups in which a chloride or bromide or iodide ion is a counter anion, and other ionic groups. Here, the reactive group may also serve as the hydrophilic group, and the hydrophilic group may also serve as the reactive group.

Hydrophobic monomer (a21) may have a water solubility at 25°C of 10 g/l or less, 5 g/l or less, 3 g/l or less, 1 g/l or less, 0.5 g/l or less, or 0.1 g/l or less and preferably 3 g/l or less. A homopolymer of hydrophobic monomer (a21) may have a water solubility at 25°C of 10 g/l or less, 5 g/l or less, 3 g/l or less, 1 g/l or less, 0.5 g/l or less, or 0.1 g/l or less and preferably 3 g/l or less.

Specific examples of hydrophobic monomer (a21) are as follows. Each of the compounds of the following chemical formulas is an acrylic compound having a hydrogen atom at the α-position, and may also be a methacrylic compound having a methyl group at the α-position or an α-chloroacrylic compound having a chlorine atom at the α-position.

CH₂=CHC(=O)OC₁₈H₃₇

CH₂=CHC(=O)OCₙH₂ₙ₊₁

CH₂=CHC(=O)OC₂H₄OC(=O)NHC₁₈H₃₇

CH₂=CHC(=O)OC₂H₄NHC(=O)OC₁₈H₃₇

CH₂=CHC(=O)OCₘH₂ₘNHC(=O)CₙH₂ₙ₊₁

CH₂=CHC(=O)OC₂H₄OC(=O)NHCₙH₂ₙ₊₁

CH₂=CHC(=O)OC₂H₄NHC(=O)OCₙH2ₙ₊₁

CH₂=CHC(=O)OC₂H₄NHC(=O)NHCₙH₂ₙ₊₁

CH₂=CHC(=O)OC₄H₈OC(=O)NHCₙH₂ₙ₊₁

CH₂=CHC(=O)NHCₘH₂ₘOC(=O) NHCₙH₂ₙ₊₁

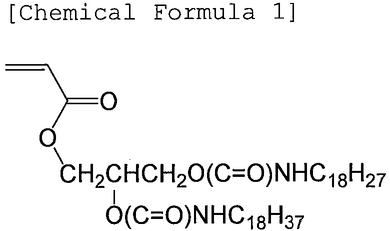

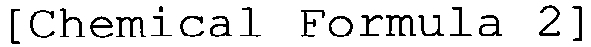

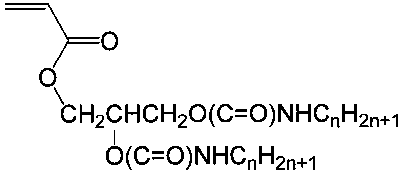

CH2=CHC(=O)OCₘH₂ₘNHSO₂CₙH₂ₙ₊₁

CH₂=CHC(=O)OCₘH₂ₘSO₂NHCₙH₂ₙ₊₁

wherein n is a numeral of 3 to 40 and m is a numeral of 1 to 5.

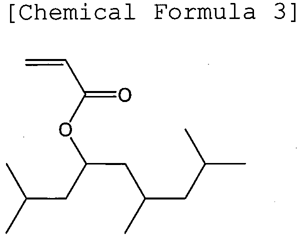

Preferred specific examples of hydrophobic monomer (a21) include stearyl (meth)acrylate, butyl (meth)acrylate, t-butyl (meth) acrylate, octyl (meth)acrylate, isooctyl (meth)acrylate, decyl (meth)acrylate, isodecyl (meth)acrylate, nonyl (meth)acrylate, isononyl (meth)acrylate, lauryl (meth)acrylate, icosyl (meth)acrylate, behenyl (meth)acrylate, stearyl α-chloroacrylate, icosyl α-chloroacrylate, behenyl α-chloroacrylate, stearamidoethyl (meth)acrylate, 2-stearamidoethyl acrylate, CH₂=CHC(=O)OC₂H₄NHSO₂C₁₈H₃₇, and the like. These may be used singly or in combination of two or more thereof.

From the viewpoint of liquid repellency of the dispersion, the hydrophobic monomer (a21) may contain the hydrophobic monomer (a21) having an amide group, a urea group or a urethane group. Hydrophobic monomer (a21) may be a combination of a hydrophobic monomer (a21) having an amide group, urea group or urethane group and a hydrophobic monomer (a21) free of an amide group, urea group or urethane group. Examples of hydrophobic monomer (a21) having an amide group, urea group or urethane group include CH₂=C(-R³²)-C(=O)-O-(CH₂)ₘ-NH-C(=O)-R³¹, CH₂=C(-R³²)-C(=O)-O-(CH₂)ₘ-O-C(=O)-NH-R³¹, CH₂=C(-R³²)-C(=O)-O-(CH₂)ₘ-NH-C(=O)-O-R³¹, and CH₂=C(-R³²)-C(=O)-O-(CH₂)ₘ-NH-C(=O)-NH-R³¹. Hydrophobic monomer (a21) may contain CH₂=C(-R³²)-C(=O)-O-(CH₂)ₘ-NH-C(=O)-R³¹.

A preferred example of the hydrophobic monomer (a21) having an amide group includes a compound represented by the following formula (i.e., stearyl group-containing amide acrylate):

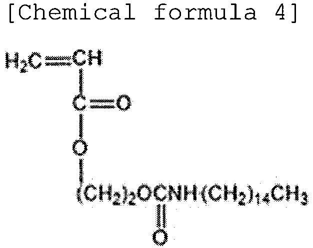

The monomer (a2) may be a chloride monomer (a22).

### (Chloride Monomer (a22))

The polymer (A) may have a repeating unit derived from at least one chloride monomer (a22) selected from the group consisting of vinyl chloride and vinylidene chloride. The chloride monomer (a22) is preferably vinyl chloride.

The monomer (a2) may be a cyclic hydrocarbon group-containing monomer (a23).

### (Cyclic Hydrocarbon Group-Containing Monomer (a23))

The polymer (A) may have a repeating unit derived from a cyclic hydrocarbon group-containing monomer (a23). Cyclic hydrocarbon group-containing monomer (a23) is a monomer having a cyclic hydrocarbon group and may be a monomer having one ethylenically unsaturated double bond and a cyclic hydrocarbon group.

Cyclic hydrocarbon group-containing monomer (a23) preferably has a (meth)acrylic group as an ethylenically unsaturated double bond, and for example, it may have a (meth)acrylate group or (meth)acrylamide group as an ethylenically unsaturated double bond.

The cyclic hydrocarbon group may be aliphatic or aromatic and is preferably aliphatic. The cyclic hydrocarbon group may be saturated or unsaturated and is preferably saturated. The cyclic hydrocarbon group may be a monocyclic group, polycyclic group, or bridged ring group and is preferably the bridged ring group. The cyclic hydrocarbon group may have a chain group (for example, linear or branched chain hydrocarbon group).

The number of carbon atoms of the cyclic hydrocarbon group may be 4 or more, 6 or more, or 8 or more, and may be 30 or less, 26 or less, 22 or less, 18 or less, or 14 or less.

Specific examples of the cyclic hydrocarbon groups include a cyclohexyl group, t-butylcyclohexyl group, adamantyl group, 2-methyl-2-adamantyl group, 2-ethyl-2-adamantyl group, bornyl group, isobornyl group, norbornyl group, dicyclopentanyl group, dicyclopentenyl group, benzyl group, phenyl group, naphthyl group, 2-t-butylphenyl group, a residual group formed by removing one or more hydrogen atoms from any of these groups (for example, a cyclohexylene group, adamantylene group, phenylene group, and naphthylene group), and a group formed by substituting any of these groups.

Specific examples of cyclic hydrocarbon group-containing monomer (a23) include cyclohexyl (meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, 2-ethyl-2-adamantyl (meth)acrylate, and an acrylamide compound from any of these acrylates. These may be used singly or in combination of two or more thereof.

The monomer (a2) may be a crosslinkable monomer (a24).

### (Crosslinkable monomer (a24))

The polymer (A) may have a repeating unit derived from a crosslinkable monomer (a24). Crosslinkable monomer (a24) is a monomer capable of imparting crosslinkability to a copolymer and may have at least two selected from the group consisting of a reactive group and an olefinic carbon-carbon double bond. Crosslinkable monomer (a24) may be a compound having at least two ethylenically unsaturated double bonds, or a compound having at least one ethylenically unsaturated double bond and at least one reactive group.

Crosslinkable monomer (a24) preferably has a (meth)acrylic group as an ethylenically unsaturated double bond, and for example, it may have a (meth)acrylate group or (meth)acrylamide group as an ethylenically unsaturated double bond.

Examples of the reactive groups include a hydroxyl group, epoxy group, chloromethyl group, block isocyanate group, amino group, carboxyl group, carbonyl group, and isocyanate group (block isocyanate group).

Specific examples of crosslinkable monomer (a24) include diacetone (meth)acrylamide, N-methylol (meth)acrylamide, hydroxyethyl (meth)acrylamide, glycidyl (meth)acrylate, hydroxymethyl (meth)acrylate, hydroxyethyl (meth)acrylate, 2,3-dihydroxypropyl (meth) acrylate, 3-chloro-2-hydroxypropyl (meth)acrylate, 2-acetoacetoxyethyl (meth)acrylate, butadiene, isoprene, chloroprene, vinyl monochloroacetate, vinyl methacrylate, glycidyl(meth) acrylate, 1,4-butanediol di (meth) acrylate, 1,6-hexanediol di(meth)acrylate, 1,9-nonanediol di(meth)acrylate, neopentylglycol di (meth)acrylate, and an acrylamide compound from any of these acrylates. These may be used singly or in combination of two or more thereof. These may be used singly or in combination of two or more thereof.

The monomer (a2) may be the other monomer (a25) other than the above monomers (a21) to (a24).

### (Other Monomer (a25))

Specific examples of the other monomers (a25) include, for example, ethylene, a halogenated olefin, vinyl acetate, acrylonitrile, an alkoxy polyalkylene glycol (meth)acrylate, and a vinyl alkyl ether. The other fluorine-free monomers are not limited to these examples. These may be used singly or in combination of two or more thereof.

In a preferred aspect, the polymer (A) contains a repeating unit derived from the stearyl group-containing amide acrylate as the monomer (a2).

In other preferred aspect, the polymer (A) contains a repeating unit derived from vinyl chloride as the monomer (a2).

### (Composition of Polymer)

The polymer (A) may be a homopolymer containing a repeating unit derived from one type of monomer (a1), or a copolymer containing repeating units derived from plural types of monomers (a1). The polymer (A) may also be a copolymer containing repeating units derived from one or more types of the monomers (a1) and repeating units derived from one or more types of the monomers (a2). In a preferred aspect, the polymer (A) is a homopolymer containing a repeating unit derived from one type of monomer (a1). In another preferred aspect, the polymer (A) is a copolymer containing a repeating unit derived from one type of monomer (a1) and one type of monomer (a2).

In yet another preferred aspect, the polymer (A) is a copolymer containing repeating units derived from one type of monomer (a1) and two types of monomers (a2). As an example of such an aspect, the polymer (A) may contain a repeating unit derived from stearyl acrylate as the monomer (a1), and a repeating unit derived from the stearyl group-containing amide acrylate and a repeating unit derived from vinyl chloride as the monomer (a2).

The amount of repeating units derived from monomer (a1) may be 15% by weight or more, 20% by weight or more, 25% by weight or more, 35% by weight or more, 45% by weight or more, 55% by weight or more, or 65% by weight or more, relative to the total amount of the polymer (A). The amount of repeating units derived from monomer (a1) may be 98% by weight or less, 95% by weight or less, 90% by weight or less, 80% by weight or less, 70% by weight or less, or 60% by weight or less, relative to the total amount of the polymer (A).

When the polymer (A) is a copolymer containing a repeating unit derived from the monomer (a1) and a repeating unit derived from the monomer (a2), the monomer (a2) may be any one type of the above monomers (a21) to (a24), or may contain two or more different types of monomers among the above monomers (a21) to (a24). For example, the monomer (a2) may contain only one type of monomers contained in the above hydrophobic monomer (a21), or may contain two or more types of monomers thereof. Alternatively, for example, the monomer (a2) may have one or two or more types of monomers contained in the hydrophobic monomer (a21) and one or two or more types of monomers contained in the above chloride monomer (a22).

When the polymer (A) is a copolymer containing a repeating unit derived from the monomer (a1) and a repeating unit derived from the monomer (a2), the monomer (a2) is preferably the hydrophobic monomer (a21) or the chloride monomer (a22).

In the repeating units derived from hydrophobic monomer (a21), the proportion of hydrophobic monomer (a21) having an amide group, urea group or urethane group may be 1% by weight or more, 3% by weight or more, 5% by weight or more, 10% by weight or more, 20% by weight or more, 30% by weight or more, 50% by weight or more, or 75% by weight or more. In the repeating units derived from hydrophobic monomer (a21), the proportion of hydrophobic monomer (a1) having an amide group, urea group, or urethane group may be 100% by weight or less, 90% by weight or less, 80% by weight or less, or 70% by weight or less.

The amount of repeating units derived from chloride monomer (a22) may be 3% by weight or more, 5% by weight or more, 10% by weight or more, 15% by weight or more, 20% by weight or more, 25% by weight or more, or 35% by weight or more, relative to the total amount of the polymer (A). The amount of repeating units derived from chloride monomer (a2) may be 80% by weight or less, 70% by weight or less, 60% by weight or less, 50% by weight or less, 40% by weight or less, 30% by weight or less, 20% by weight or less, or 10% by weight or less, and preferably 60% by weight or less, relative to the total amount of the polymer (A).

The amount of repeating units derived from cyclic hydrocarbon group-containing monomer (a23) may be 0.5% by weight or more, 1% by weight or more, 3% by weight or more, or 4% by weight or more, relative to the total amount of the polymer (A). The amount of repeating units derived from cyclic hydrocarbon group-containing monomer (a23) may be 30% by weight or less, 20% by weight or less, 15% by weight or less, 10% by weight or less, 7.5% by weight or less, or 5% by weight or less, relative to the total amount of the polymer (A).

The amount of repeating units derived from crosslinkable monomer (a24) may be 0.5% by weight or more, 1% by weight or more, 3% by weight or more, or 4% by weight or more, relative to the total amount of the polymer (A). The amount of repeating units derived from crosslinkable monomer (a24) may be 30% by weight or less, 20% by weight or less, 15% by weight or less, 10% by weight or less, 7.5% by weight or less, or 5% by weight or less, relative to the total amount of the polymer (A).

The amount of repeating units derived from the other monomer (a25) may be 0.5% by weight or more, 1% by weight or more, 3% by weight or more, or 4% by weight or more, relative to the total amount of the polymer (A). The amount of repeating units derived from the other monomer (a25) may be 30% by weight or less, 20% by weight or less, 15% by weight or less, 10% by weight or less, or 5% by weight or less, relative to the total amount of the polymer (A).

The amount of repeating units derived from chloride monomer (a22) may be 5 parts by weight or more, 10 parts by weight or more, 25 parts by weight or more, 50 parts by weight or more, 75 parts by weight or more, or 100 parts by weight or more, per 100 parts by weight of repeating units derived from hydrophobic monomer (a21). The amount of repeating units derived from the chloride monomer (a2) may be 150 parts by weight or less, 125 parts by weight or less, 100 parts by weight or less, 75 parts by weight or less, 50 parts by weight or less, or 25 parts by weight or less, per 100 parts by weight of repeating units derived from the hydrophobic monomer (a21).

The amount of repeating unit derived from cyclic hydrocarbon group-containing monomer (a23) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from hydrophobic monomer (a21). The amount of repeating units derived from the cyclic hydrocarbon group-containing monomer (a23) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from the hydrophobic monomer (a21).

The amount of repeating units derived from the crosslinkable monomer (a24) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from the hydrophobic monomer (a21). The amount of repeating units derived from the crosslinkable monomer (a24) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from the hydrophobic monomer (a21).

The amount of repeating units derived from the other monomer (a25) may be 2.5 parts by weight or more, 5 parts by weight or more, 12.5 parts by weight or more, 25 parts by weight or more, 35 parts by weight or more, or 45 parts by weight or more, per 100 parts by weight of repeating units derived from the hydrophobic monomer (a21). The amount of repeating units derived from the other monomer (a25) may be 75 parts by weight or less, 60 parts by weight or less, 50 parts by weight or less, 40 parts by weight or less, 30 parts by weight or less, 20 parts by weight or less, or 10 parts by weight or less, per 100 parts by weight of repeating units derived from the hydrophobic monomer (a21).

The total amount of repeating units derived from the hydrophobic monomer (a21) and repeating units derived from the chloride monomer (a22) may be 50% by weight or more, 60% by weight or more, 75% by weight or more, 80% by weight or more, 85% by weight or more, 90% by weight or more, or 95% by weight or more, relative to the total amount of the polymer (A).

When the polymer (A) is a copolymer containing a repeating unit derived from the monomer (a1) and a repeating unit derived from the monomer (a2), the amount of repeating units derived from the monomer (a2) is not limited, but may be, for example, 0.5% by mass or more, 1% by mass or more, 3% by mass or more, or 4% by mass or more, relative to the polymer (A). The amount of repeating units derived from the monomer (a2) may also be, for example, 50% by mass or less, 30% by mass or less, 20% by mass or less, 15% by mass or less, 10% by mass or less, 7.5% by mass or less, or 5% by mass or less, relative to the polymer (A).

### {Polyether-Modified Polydimethylsiloxane (B)}

The polyether-modified polydimethylsiloxane (B) is represented by the following formula: 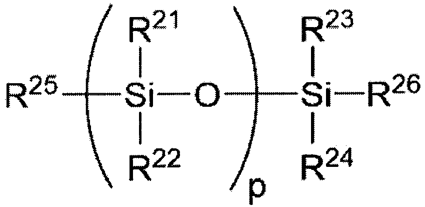 wherein R²¹ and R²² are each independently at each occurrence
-CH₃ or -R²⁷,
R²³ and R²⁴ are each independently -CH₃ or -R²⁷,
R²⁵ and R²⁶ are each independently a hydrogen atom or a monovalent organic group,
R²⁷ is a group represented by -R²⁷¹-R²⁷²-R²⁷³,
R²⁷¹ is a single bond or a divalent organic group,
R²⁷² is a divalent polyether group,
R²⁷³ is a hydrogen atom or a monovalent organic group,
p is an integer of 1 or greater,
and includes at least one -R²⁷ in one molecule of the polyether-modified polydimethylsiloxane (B).

R²¹ and R²² are each independently at each occurrence - CH₃ or -R²⁷.

R²¹ and R²² may all be methyl groups, or at least one of all occurrences of R²¹ and R²² in one molecule may be -R²⁷. Preferably, at least one of all occurrences of R²¹ and R²² in one molecule is -R²⁷.

R²³ and R²⁴ are each independently -CH₃ or -R²⁷.

R²³ and R²⁴ may be the same group or different groups. In a preferred aspect, R²³ and R²⁴ are methyl groups.

R²⁷ is a group represented by -R²⁷¹-R²⁷²-R²⁷³.

R²⁷¹ is a single bond or a divalent organic group.

The type of the divalent organic group described above is not limited, but examples thereof include a C₁₋₆ alkyl group or an aryl group.

The C₁₋₆ alkyl group may be linear or a branched. The C₁₋₆ alkyl group may also include a cyclic structure. In one aspect, the C₁₋₆ alkyl group is linear. In another aspect, the C₁₋₆ alkyl group is a branched. In another aspect, the C₁₋₆ alkyl group is a C₃₋₆ cyclic alkyl group.

The aryl group is not limited, and it may be an aryl group having 6 to 20 carbon atoms. The aryl group may contain two or more rings. A preferred aryl group is a phenyl group.

The alkyl group and aryl group described above may contain a heteroatom, such as a nitrogen atom, an oxygen atom, or a sulfur atom, in the molecular chain or ring, if desired.

Furthermore, the above alkyl and aryl groups may be substituted with one or more substituents selected from a halogen; a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group, all of which may be substituted with one or more halogens, if desired.

R²⁷² is a divalent polyether group. That is, R²⁷² is generally represented by the following formula:

-(R^{E}-O)_{q}-

wherein R^{E} is each independently at each occurrence a divalent hydrocarbon group having 1 to 20 carbon atoms, and q is any integer.

R^{E} is preferably a branched or a linear divalent hydrocarbon group. The divalent hydrocarbon group is preferably an aliphatic hydrocarbon group, particularly a saturated aliphatic hydrocarbon group, and particularly an alkylene group. The number of carbon atoms in R^{E} may be 1 or more, 2 or more, 3 or more, 5 or more, 8 or more, or 10 or more, and is preferably 2 or more. The number of carbon atoms of R^{E} may be 20 or less, 15 or less, 10 or less, 6 or less, or 3 or less, and may be preferably 6 or less, and more preferably 3 or less.

In a preferred aspect, R²⁷² is represented by the following formula:

- (R^{E'}O)ₓ-(CH₂CH₂O)_{y}-(CH(CH₃)CH₂O)_{z}-

wherein R^{E'} is the same as R^{E} above described, and
x, y, and z are each an integer of 0 or greater that satisfies x+y+z≥1. The order of -(R^{E'}O)ₓ-, -(CH₂CH₂O)_{y}-, and - (CH(CH₃)CH₂O)_{z}- is not limited to the order of the above formula, and may be random.

x, y, and z are each an integer of 0 or greater that satisfies x+y+z≥1. The values of x, y, and z are not limited as long as they are integers of 0 or greater that satisfy x+y+z≥1, and examples thereof include 0 to 300, 0 to 100, 0 to 50, 0 to 20, 0 to 10, and the like, respectively.

In a more preferred aspect, x is an arbitrary integer of 0 or greater, and y and z are each an integer of 0 or greater such that the relationship y+z≥1 is satisfied. The values of x, y, and z are not limited as long as they satisfy the above conditions, and examples thereof include x being 0 to 100, y being 1 to 300, and z being 1 to 300, and x being 0, y being 1 to 100, and z being 1 to 100, and the like.

R²⁷³ is a hydrogen atom or a monovalent organic group.

In one aspect, R²⁷³ is a hydrogen atom.

In one aspect, R²⁷³ is a monovalent organic group.

In R²⁷³, the monovalent organic group is preferably a C₁₋₂₀ alkyl group, more preferably a C₁₋₆ alkyl group, and still more preferably a methyl group.

R²⁵ and R²⁶ are each independently a hydrogen atom or a monovalent organic group.

In R²⁵ and R²⁶, the monovalent organic group is not limited, and may be any monovalent organic group as long as the polyether-modified polydimethylsiloxane (B) can be stably present.

The weight-average molecular weight of the polyether-modified polydimethylsiloxane (B) may be, for example, 600 or more, 2,000 or more, 5,000 or more, 7,000 or more, or 10,000 or more. Also, the weight-average molecular weight of the polyether-modified polydimethylsiloxane (B) may be, for example, 100,000 or less, 50,000 or less, 30,000 or less, 15,000 or less, 10,000 or less, or 8,000 or less.

The content of the polyether-modified polydimethylsiloxane (B) is 0.1 to 30 parts by mass, preferably 1 to 30 parts by mass, and more preferably 1 to 20 parts by mass, per 100 parts by mass of the polymer (A).

### {Aqueous Medium}

The present composition contains, in addition to the polymer (A) and the polyether-modified polydimethylsiloxane (B), an aqueous medium (C).

The aqueous medium is water or a mixture of water and an organic solvent (an organic solvent that is miscible with water) (the amount of organic solvent is not limited, but is, for example, 50 parts by mass or less, preferably 30 parts by mass or less, and more preferably 520 parts by mass or less, per 100 parts by mass of water).

The aqueous medium is preferably a mixture of water and an organic solvent. Containing the organic solvent allows a combination of water-repellency, slip resistance, and storage stability to be favorably achieved.

Examples of the organic solvents include esters (for example, esters having 2 to 40 carbon atoms, specifically, ethyl acetate and butyl acetate), ketones (for example, ketones having 2 to 40 carbon atoms, specifically, methyl ethyl ketone and diisobutyl ketone), alcohols (for example, an alcohol having 1 to 40 carbon atoms, specifically, isopropyl alcohol), aromatic-based solvents (for example, toluene and xylene), and petroleum-based solvents (for example, alkanes having 5 to 10 carbon atoms, specifically, naphtha and kerosene). The organic solvent is preferably a water-soluble organic solvent. The water-soluble organic solvent may contain a compound having at least one hydroxy group (for example, an alcohol, a polyhydric alcohol such as a glycol-based solvent, an ether (for example, monoether) of polyhydric alcohol, and the like). These may be used singly or in combinations of two or more thereof.

### (Amount of Aqueous Medium)

The amount of aqueous medium is not limited, but may be, for example, 1% by mass or more, 2% by mass or more, 3% by mass or more, 5% by mass or more, 7% by mass or more, 10% by mass or more, 15% by mass or more, 20% by mass or more, 30% by mass or more, 40% by mass or more, 50% by mass or more, or 60% by mass or more, relative to the water-repellent composition, and the amount of aqueous medium may be 80% by mass or less, 60% by mass or less, 50% by mass or less, 40% by mass or less, 30% by mass or less, 20% by mass or less, 15% by mass or less, or 10% by mass or less, relative to the water-repellent composition. The amount of the aqueous medium is preferably 2 to 40% by mass and more preferably 4 to 30% by mass, relative to the water-repellent composition.

By emulsion polymerization in which the monomer is polymerized in the presence of the aqueous medium, a polymer composition, which is a dispersion of the polymer is preferably formed. The polymer composition is preferably an aqueous dispersion, more specifically, an aqueous dispersion in which particles of the polymer are dispersed in the aqueous medium. In the dispersion, an average particle size of particles of a hydrocarbon group-containing polymer is preferably 0.01 to 200 micrometers, for example 0.1 to 5 micrometers and particularly 0.05 to 0.2 micrometers. The average particle size can be measured by a dynamic light scattering apparatus, a laser diffraction particle size distribution measurement apparatus, an electron microscope, or the like.

The amount of organic solvent may be 1% by weight or more, 3% by weight or more, 5% by weight or more, 10% by weight or more, 20% by weight or more, 30% by weight or more, or 40% by weight or more, relative to the aqueous medium. The amount of organic solvent may be 55% by weight or less, 45% by weight or less, 35% by weight or less, 25% by weight or less, 15% by weight or less, 12.5% by weight or less, 7.5% by weight or less, or 5.0% by weight or less, relative to the aqueous medium.

### {Silicone}

The water-repellent composition in the present disclosure may contain other silicones in addition to the polyether-modified polydimethylsiloxane (B). Containing other silicone allows the composition to have both favorable water-repellency and slip resistance.

The silicone may be the polymer represented by formula:

(R⁵³)₃Si-O-[-Si(R⁵¹)₂-O-]ₐ-[-Si (R⁵¹)₂-O-]_{b}-Si(R⁵³)₃ (S1)
wherein R⁵¹ each independently represents a hydrogen atom, an alkyl group having 1 to 40 carbon atoms, an aryl group having 6 to 40 carbon atoms, or an alkoxy group having 1 to 40 carbon atoms,
R⁵³ each independently represents a hydrogen atom, an alkyl group having 1 to 40 carbon atoms, an aryl group having 6 to 40 carbon atoms, an alkoxy group having 1 to 40 carbon atoms, or a saturated hydrocarbon group having 1 to 40 carbon atoms, a represents an integer of 0 or more, b represents an integer of 1 or more, and (a + b) is 5 to 200.

In R⁵¹ and R⁵³, the alkyl group having 1 to 40 carbon atoms and the aryl group having 6 to 40 carbon atoms may be unsubstituted or substituted.

Specific examples of R⁵¹ and R⁵³ include a methyl group, ethyl group, propyl group, butyl group, pentyl group, hexyl group, heptyl group, octyl group, nonyl group, decyl group, dodecyl group, tetradecyl group, hexadecyl group, octadecyl group; cyclopentyl group, cyclohexyl group, cycloheptyl group; phenyl group, tolyl group, naphthyl group, or groups in which hydrogen atoms bonded to these groups are partially or totally substituted with halogen atoms, amino groups, cyano groups, or the like. R⁵¹ and R⁵³ are each preferably a methyl group or ethyl group.

In R⁵¹ and R⁵³, the alkoxy group having 1 to 40 carbon atoms may be linear or branched. Examples of the alkoxy group having 1 to 40 carbon atoms are a methoxy group, ethoxy group, propoxy group, and butoxy group.

The silicone may have at least one long chain hydrocarbon group. For example, at least one of R⁵¹, at least one of R⁵³, or at least one of each of R⁵¹ and R⁵³, in Formula (S1) may be a long chain hydrocarbon group, and at least one (for example, one) of R⁵¹ may be a long chain hydrocarbon group. Herein, the long chain hydrocarbon group may be a saturated hydrocarbon group having 6 or more, 10 or more, 15 or more, or 20 or more carbon atoms, preferably 10 or more or 23 or more carbon atoms. Herein, the hydrocarbon group may be linear or branched, and is preferably an alkyl group. Specific examples of the hydrocarbon group include a hexyl group (6 carbon atoms), octyl group (8 carbon atoms), lauryl group (12 carbon atoms), myristyl group (14 carbon atoms), stearyl group (18 carbon atoms), behenyl group (22 carbon atoms), tricosyl group (23 carbon atoms), lignoceryl group (tetracosyl group, 24 carbon atoms), serotyl group (hexacosyl group, 26 carbon atoms), montyl group (octacosyl group, 28 carbon atoms), melicyl group (triacontane group, 30 carbon atoms), and dotriacontane group (32 carbon atoms).

In terms of ease of industrial manufacture and availability, R⁵¹ and R⁵³ other than the R⁵¹ and R⁵³ that are long chain hydrocarbon groups, are preferably hydrogen atoms or methyl groups and more preferably methyl groups.
a is an integer 0 or more. In terms of ease of industrial manufacture and availability, a may be 40 or less, 30 or less, or 20 or less, and is preferably 30 or less.

The total of a and b is 5 to 200. In terms of ease of industrial manufacture, availability, and handleability, the total of a and b is preferably 10 to 100 and more preferably 40 to 60. a may be 0 to 150, for example, 1 to 100. The lower limit of b may be 1 or 2 or 3, and the upper limit of b may be 150, 10 or 5.

When a or b is 2 or more, each of R⁵¹ and R⁵² that are present in plurality may be the same or different.

50 mol% or more of the total amount of R⁵¹ and R⁵³ groups (for example, the R⁵¹, R⁵² group, and R⁵³ group when represented in the following Formula (S2)) is preferably a methyl group.

The occurrence order of the repeating unit bracketed by a or b is not limited to the occurrence order of the repeating unit represented in the chemical formula, and is arbitrary. Namely, the silicone may be a random polymer or a blocked polymer.

For example, the silicone may be the polymer represented by formula:

(R⁵³)₃Si-O-[-Si(R⁵¹)₂-O-]ₐ-[-Si(R⁵¹)(R⁵²)-O-]_{b}-Si(R⁵³)₃ (S2)

wherein R⁵¹ each independently represents a hydrogen atom, an alkyl group having 1 to 40 carbon atoms, an aryl group having 6 to 40 carbon atoms, an alkoxy group having 1 to 40 carbon atoms, or a long chain hydrocarbon group,
R⁵² each independently represents a long chain hydrocarbon group,
R⁵³ each independently represents a hydrogen atom, an alkyl group having 1 to 40 carbon atoms, an aryl group having 6 to 40 carbon atoms, an alkoxy group having 1 to 40 carbon atoms, or a long chain hydrocarbon group,
a represents an integer of 0 or more, b represents an integer of 1 or more, and (a + b) is 5 to 200.

In Formula (S2), R⁵¹ and R⁵³ may have an alkyl group having 3 to 40 carbon atoms or an unsaturated hydrocarbon group having 6 to 40 carbon atoms (for example, a hydrocarbon group having an aromatic ring), but are preferably free of these groups.

An example of the silicone is as follows: 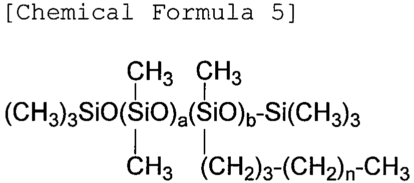
wherein a represents an integer of 0 to 150,
b represents an integer of 1 to 150,
(a + b) is 5 to 200, and
n is an integer of 1 to 36 (n is preferably a long chain hydrocarbon group).

The silicone can be synthesized by conventionally known methods. The silicone can be obtained, for example, by subjecting silicone having a SiH group to a hydrosilylation reaction with an α-olefin.

Examples of the silicone having a SiH group include, for example, methyl hydrogen silicone with a degree of polymerization of 10 to 200, or a copolymer of dimethyl siloxane and methyl hydrogen siloxane. Among them, the methyl hydrogen silicone is preferred in terms of ease of industrial manufacture and availability. The hydrogen silicone (for example, methyl hydrogen silicone) is that in which a side chain of a polydiorganosiloxane is partially substituted with hydrogen and the hydrogen atom is directly connected to the silicon atom. In using the hydrogen silicone, a catalyst may be used to improve its reactivity. For example, zinc, tin, manganese, cobalt, iron, and amine-based catalyst can be used. As these catalysts, an organic acid metal salt is preferred, and as the organic acid, a fatty acid is preferred. From the viewpoint of safety, zinc stearate and the like can be used. Use of 10 to 40% of the catalyst relative to methyl hydrogen silicone, facilitates demonstrating its effect, which is preferred. Two or more types of amino-modified or epoxy-modified silicone, carboxy-modified silicone, and methyl hydrogen silicone may be mixed. Preferably, all of the silicones have reactive groups and are those having film formability. The film formability means that after the silicone in an emulsion state is adhered to a fiber surface, the silicone forms a solid film and does not become an oil or gel.

The α-olefin is a compound from which a long chain hydrocarbon group is derived in silicone. Specific examples of the α-olefin are 1-tricosene, 1-tetracosene, 1-hexacosene, 1-octacosene, 1-triacontene, and 1-dotriacontene.

The hydrosilylation reaction may be carried out by reacting the silicone having a SiH group with the α-olefin stepwisely or all at once in the presence of a catalyst, if necessary.

The amounts of the silicone having a SiH group and α-olefin used in the hydrosilylation reaction can be appropriately selected depending on a SiH group equivalent, the number average molecular weight, or the like, of the silicone having a SiH group.

Examples of the catalyst used in the hydrosilylation reaction include compounds such as platinum and palladium, and among them, the platinum compound being preferred. Examples of the platinum compound include platinum (IV) chloride.

The reaction conditions for the hydrosilylation reaction are not limited and can be appropriately adjusted. A reaction temperature is, for example, 10 to 200°C and preferably 50 to 150°C. A reaction time can be, for example, 3 to 12 hours when the reaction temperature is 50 to 150°C.

The hydrosilylation reaction is preferably carried out under an inert gas atmosphere. Examples of the inert gas include, for example, nitrogen, argon, and the like. The reaction proceeds in the absence of solvent, however, a solvent may also be used. Examples of the solvent include, for example, dioxane, methyl isobutyl ketone, toluene, xylene, butyl acetate, and the like.

### (Reactive Silicone)

The silicone may include reactive silicone. Examples of the reactive silicone include polysiloxanes having a reactive group on a side chain, at one terminal, at each of both terminals, or on a side chain and each of both terminals, and may be a polysiloxane having a reactive group on a side chain and/or at each of both terminals in view of excellent sliding resistance as well as water-repellency at the same time. The reactive silicone is not limited as long as it has a reactive group in its molecule, and examples thereof include, for example, amino-modified silicone, epoxy-modified silicone, carboxy-modified silicone, hydrogen-modified silicone, and the like. The reactive silicone may be silicone in which one or more substituents in the above Formula (S1) or Formula (S2) are substituted with reactive groups.

Examples of the amino-modified silicone include those having a structure in which an amino group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. The amino group may be any of a primary amino group, secondary amino group, or tertiary amino group. Examples of the organic group to which an amino group is bonded include: a 2-aminoethyl group, N-methyl-2-aminoethyl group, N,N-dimethyl-2-aminoethyl group, N-ethyl-2-aminoethyl group, N,N-diethyl-2-aminoethyl group, N,N-methylethyl-2-aminoethyl group, 3-aminopropyl group, N-methyl-3-aminopropyl group, N, N-dimethyl-3-aminopropyl group, N-ethyl-3-anopropyl group, N,N-diethyl-3-aminopropyl group, and N,N-methylethyl-3-aminopropyl group. These functional groups may be on a side chain of a polysiloxane or at the terminal thereof.

Examples of the epoxy-modified silicone include those having a structure in which an epoxy group is bonded to an organic group directly connected to a silicon atom. The organic group may be either an alkylene group or a divalent aromatic group. The epoxy group in this case usually bonds to the organic group to form a glycidyl ether. Examples of such a functional group include a 3-glycidoxypropyl group and 2-glycidoxyethyl group. These functional groups may be on a side chain of a polysiloxane or at the terminal thereof.

Examples of the carboxy-modified silicones include those having a structure in which a carboxy group is bonded to an organic group directly connected to a silicon atom. The organic group may be either an alkylene group or a divalent aromatic group. The alkylene group is preferably those having 2 or more carbon atoms. The divalent aromatic group is preferably those having 6 or more carbon atoms. Examples of such a functional group include a 3-carboxypropyl group and 2-carboxyethyl group. These functional groups may be on a side chain of a polysiloxane or at the terminal thereof.

### (Silicone Resin)

The silicone may contain a silicone resin. The silicone resin is a silicone resin composed of at least one selected from a R₃SiO_{1/2} unit (M unit), a RSiO_{3/2} unit (T unit) and a SiO_{4/2} unit (Q unit), wherein R is a linear or branched monovalent alkyl group having 1 to 18 carbon atoms, and silicone resins composed of M units singly and of Q units singly are excluded). The silicone resin (3) is preferably free of a R₂SiO_{2/2} unit (D unit), from the viewpoint of exhibiting effects of the present application.

The silicone resin is preferably in a sol state. Examples of R include, for example, a methyl group, an ethyl group, a propyl group, an isopropyl group, a butyl group, an isobutyl group, a hexyl group, an octyl group, a 2-ethylhexyl group, a decyl group, a cetyl group, and a stearyl group, however, from the viewpoint of stability when the silicone resin (3) is in a sol state, availability of raw materials, and costs, R is preferably a methyl group, and 90% or more of all R is particularly preferably a methyl group. It is to be noted that R may combine different types of groups for use.

When the silicone resin includes a R₂SiO_{2/2} unit (D unit), the composition may impair a low sliding property. The silicone resin composed of Q units singly may impair water-repellent performance as the composition.

As structures of the silicone resin, silicone resins composed of (i) M units and Q units, (ii) M units, T units and Q units, (iii) M units and T units, (iv) T units and Q units, and (v) T units singly, are exemplified, and the silicon resin may preferably be a silicon resin composed of (i) M units and Q units and a silicone resin composed of (v) T units singly. A molar ratio of M units to Q units (M/Q) of the silicone resin composed of (i) M units and Q units is preferably M/Q = 0.6 to 1.3 and more preferably M/Q = 0.8 to 1.1. It is to be noted that these silicone resins may be used in combination of two or more thereof.

Also, the silicone resin (3) can contain a constituent unit containing a hydroxyl group bonded to a silicon atom. Specific examples thereof include a (HO) RSiO_{2/2} unit, a (HO)₂RSiO_{1/2} unit, a (HO)SiO_{3/2} unit, a (HO)₂SiO_{2/2} unit, a (HO)₃ SiO_{2/2} unit, and the constituent unit may be an alkoxy group in which a moiety of the hydroxyl group is represented by a RO group.

A sol containing the silicone resin can be obtained, as described in JP3852921B, by a production method for dispersing an organodisiloxane, a tetraalkoxysilane, and their partially hydrolyzed condensates homogeneously and polymerizing them in water containing a surfactant, or by a production method for hydrolyzing the following silane compounds in water.

The production method for hydrolyzing a silane compound in water will be described in detail. As a raw material to be used for production, any silane compound can be used as long as it has a type of hydrolyzable group of chloro or alkoxy, contains one, three or four hydrolyzable groups, and has an alkyl group that satisfies the above-described conditions. Specific examples of the silane compounds that can be used include, for example, tetrachlorosilane, tetramethoxysilane, tetraethoxysilane, tetrabutoxysilane, methyltrichlorosilane, methyltrimethoxysilane, methyltriethoxysilane, methyltriisopropoxysilane, methyltributoxysilane, ethyltrichlorosilane, ethyltrimethoxysilane, ethyltriethoxysilane, propyltrichlorosilane, propyltrimethoxysilane, propyltriethoxysilane, isopropyltrichlorosilane, isopropyltrimethoxysilane, isopropyltriethoxysilane, butyltrichlorosilane, butyltrimethoxysilane, butyltriethoxysilane, isobutyltrichlorosilane, isobutyltrimethoxysilane, isobutyltriethoxysilane, hexyltrichlorosilane, hexyltrimethoxysilane, hexyltriethoxysilane, 2-ethylhexyltrichlorosilane, 2-ethylhexyltrimethoxysilane, 2-ethylhexyltriethoxysilane, decyltrichlorosilane, decyltrimethoxysilane, decyltriethoxysilane, cetyltrichlorosilane, cetyltrimethoxysilane, cetyltriethoxysilane, stearyl trichlorosilane, stearyl trimethoxysilane, stearyl triethoxysilane, trimethyl chlorosilane, trimethyl methoxysilane, trimethyl ethoxysilane, trimethyl isopropoxysilane, dimethyl ethyl chlorosilane, dimethyl ethyl methoxysilane, dimethyl ethyl ethoxysilane, dimethyl propyl chlorosilane, dimethyl propyl methoxysilane, dimethyl propyl ethoxysilane, dimethyl isopropyl chlorosilane, dimethyl isopropyl methoxysilane, dimethyl isopropyl ethoxysilane, dimethyl hexyl chlorosilane, dimethyl hexyl methoxysilane, dimethyl hexyl ethoxysilane, dimethyl decyl chlorosilane, dimethyl decyl methoxysilane, dimethyl decyl ethoxysilane, dimethyl cetyl chlorosilane, dimethyl cetyl methoxysilane, dimethyl cetyl ethoxysilane, dimethyl stearyl chlorosilane, dimethyl stearyl methoxysilane, dimethyl stearyl ethoxysilane, and partially hydrolyzed compounds thereof, but are not limited thereto. From the viewpoints of operability, facilitation of distilling off by-products, and availability of raw materials, methoxysilane or ethoxysilane is preferably used. One type of these silane compounds or a mixture of two or more of thereof may be used.

As the method for hydrolyzing a silane compound in water, a commonly known method can be employed. That is, a method is employed that includes hydrolyzing a silane compound while adding it dropwise into water, or mixing water and a silane compound all at once and then carrying out a hydrolysis reaction.

Upon carrying out the hydrolysis reaction, a hydrolysis catalyst may be used. A conventionally known catalyst may be used as the hydrolysis catalyst, and acidic or alkaline catalyst is preferably used. In the case of an acidic catalyst, hydrogen halide, carboxylic acid, sulfonic acid, an acidic or weakly acidic inorganic salt, and solid acid such as an ion exchange resin, are preferred. In the case of an alkaline catalyst, alkali metal salts such as sodium hydroxide, potassium hydroxide, sodium carbonate, potassium carbonate, and sodium hydrogen carbonate, alkali metal silanolates such as sodium silanolate and potassium silanolate, amines such as triethylamine, diethylamine, and aniline, ammonia water, etc., can be used. The amount of catalyst added is preferably adjusted so that a pH of its aqueous solution is 2 to 7 or 7 to 12. Also, after completion of the reaction, a neutralizing agent for neutralizing the acidic or alkaline catalyst may be added, if necessary.

A surfactant may be added to the aqueous solution in order to disperse the silane compound and the hydrolysis reaction product in water. The surfactant is not limited, and for example, anionic surfactants such as an alkyl sulfate, an alkylbenzene sulfonate, and an alkyl phosphate; nonionic surfactants such as a polyoxyethylene alkyl ether, a polyoxyethylene oxypropylene alkyl ether, a polyoxyethylene alkyl phenyl ether, and a polyoxyethylene fatty acid ester; cationic surfactants such as a quaternary ammonium salt and an alkylamine acetate; and amphoteric surfactants such as an alkyl betaine and an alkyl imidazoline, etc., can be used, and these can be used singly or in combination of two or more thereof. A surfactant that exhibits acidity or alkalinity can also be used as a hydrolysis catalyst. The amount of surfactant when added is not limited, but is preferably 1 to 50 parts by weight per 100 parts by weight of the silane compound. The amount less than 1 part by weight may result in rendering an insufficient effect of adding the surfactant, and the amount more than 50 parts by weight may result in impairment of water-repellency of a water-repellent agent.

To a mixture of water and the silane compound may be added a hydrolysis catalyst and surfactant, if necessary to carry out a hydrolysis reaction at 0 to 90°C for 10 minutes to 24 hours. Thereafter, a neutralization reaction is carried out, if necessary to be able to obtain a silicone resin. Also, alcohols, neutralized salts, etc., which have been produced as by-products in the hydrolysis reaction can be removed by vacuum distillation, filtration or the like. Various additives can be added to this silicone resin. For example, an antiseptic agent, a thickener, or the like can be added depending on a purpose.

### (Amount of Silicone)

The amount of silicone may be 0.1 parts by weight or more, 1 part by weight or more, 3 parts by weight or more, 5 parts by weight or more, 10 parts by weight or more, 15 parts by weight or more, or 20 parts by weight or more, per 100 parts by weight of the polymer. The amount of silicone is 50 parts by weight or less, 40 parts by weight or less, 30 parts by weight or less, 20 parts by weight or less, 10 parts by weight or less, or 5 parts by weight or less, per 100 parts by weight of the polymer.

### {Wax}

The water-repellent composition in the present disclosure may contain wax. Containing the wax can favorably combine the water-repellency and slip resistance.

Examples of the wax include paraffin wax, microcrystalline wax, Fischer-Tropsch wax, polyolefin wax (polyethylene wax, polypropylene wax, etc.), oxidized polyolefin wax, animal and vegetable wax, mineral wax, and the like. The paraffin wax is preferred. Specific examples of compounds constituting the wax include normal alkanes (for example, tricosane, tetracosane, pentacosane, hexacosane, heptacosane, octacosane, nonacosane, triacontane, hentriacontane, dotriacontane, tritriacontane, tetratriacontane, pentatriacontane, and hexatriacontane), normal alkenes (for example, 1-eicosene, 1-docosene, 1-tricosene, 1-tetracosene, 1-pentacosene, 1-hexacosene, 1-heptacosene, 1-octacosene, nonacosane, triacontane, hentriacontane, dotriacontane, tritriacontane, tetratriacontane, pentatriacontane, and hexatriacontane). The number of carbon atoms in the compounds constituting the wax is preferably 20 to 60, for example 25 to 45. The molecular weight of the wax may be 200 to 2,000, for example, 250 to 1,500, or 300 to 1,000. These may be used singly or in combinations of two or more thereof.

The melting point of the wax may be 50°C or higher, 55°C or higher, 60°C or higher, 65°C or higher, or 70°C or higher, and is preferably 55°C or higher and more preferably 60°C or higher. The melting point of the wax is measured in accordance with JIS K 2235-1991.

### (Amount of Wax)

The amount of wax may be 0.1 parts by mass or more, 1 part by mass or more, 3 parts by mass or more, 5 parts by mass or more, 10 parts by mass or more, 15 parts by mass or more, or 20 parts by mass or more, per 100 parts by mass of the polymer (A). The amount of wax may be 50 parts by mass or less, 40 parts by mass or less, 30 parts by mass or less, 20 parts by mass or less, 10 parts by mass or less, or 5 parts by mass or less, per 100 parts by mass of the polymer (A).

### {Inorganic Particles}

The water-repellent composition of the present disclosure may contain inorganic particles. Containing the inorganic particles favorably enables imparting water-repellency and slip resistance. The inorganic particle may be an aluminum compound (for example, alumina), a silicon compound (for example, silica), a titanium compound, etc. These may be used singly or in combination of two or more thereof. The inorganic particles may be subjected to hydrophilic surface treatment or hydrophobic surface treatment.

An average primary particle size of the inorganic particles may be 5 nm or more, 10 nm or more, 15 nm or more, 20 nm or more, 25 nm or more, or 30 nm or more. The average primary particle size of the inorganic particles may be 600 nm or less, 400 nm or less, 200 nm or less, 100 nm or less, 40 nm or less, 37.5 nm or less, 35 nm or less, 32.5 nm or less, 30 nm or less, 27.5 nm or less, 25 nm or less, or 22.5 nm or less, and is preferably 40 nm or less. Within the above range of the average primary particle size, water-repellency and slip resistance can be favorably combined. The average primary particle size can be measured with a microscope (scanning electron microscope or transmission electron microscope). Specifically, an arbitrary location on fabric is observed with a microscope from above at an arbitrary magnification. Next, when the particle shape is spherical, the particle diameter is considered to be a particle size, and when the particle shape is non-spherical, an average value of the longest length and the shortest length is considered to be a particle size. Particle sizes of all the particles present within the field of view are measured, and again measured by moving the field of view repeatedly to measure particle sizes at 10 or more points, and the average value thereof is taken as an average primary particle size.

### (Amount of Inorganic Particles)

The amount of inorganic particles may be 0.1 parts by mass or more, 1 part by mass or more, 3 parts by mass or more, 5 parts by mass or more, 10 parts by mass or more, 15 parts by mass or more, or 20 parts by mass or more, per 100 parts by mass of the polymer (A). The amount of inorganic particles may be 50 parts by mass or less, 40 parts by mass or less, 30 parts by mass or less, 20 parts by mass or less, 10 parts by mass or less, or 5 parts by mass or less, per 100 parts by mass of the polymer (A).

### {Dispersant}

The water-repellent composition may contain a dispersant. The dispersant may be a polymeric dispersant, preferably a hydrophilic polymeric dispersant. As the dispersant, a polyvinylpyrrolidone and polyvinyl alcohol, a polyglycerin, a polyacrylic acid salt, and the like, can be used. These may be used singly or in combinations of two or more thereof.

### (Amount of Dispersant)

The amount of the dispersant may be 0.1 parts by mass or more, 1 part by mass or more, 3 parts by mass or more, 5 parts by mass or more, 10 parts by mass or more, 15 parts by mass or more, or 20 parts by mass or more, per 100 parts by mass of the polymer (A). The amount of the dispersant may be 50 parts by mass or less, 40 parts by mass or less, 30 parts by mass or less, 20 parts by mass or less, 10 parts by mass or less, or 5 parts by mass or less, per 100 parts by mass of the polymer (A).

### {Surfactant}

The water-repellent composition preferably contains a surfactant. In the water-repellent composition, the surfactant may include a nonionic surfactant. Containing the surfactant can favorably combine the water-repellency and slip resistance. Further, the surfactant may include one or more surfactants selected from a cationic surfactant, an anionic surfactant, and an amphoteric surfactant. In a preferred aspect, the water-repellent composition contains a nonionic surfactant.

### (Nonionic Surfactant)

The nonionic dispersant may be of a low molecular weight type (for example, a molecular weight of 2,000 or less and particularly 10,000 or less) or of a polymeric type (for example, a molecular weight of 2,000 or more). The molecular weight of the nonionic dispersant may be 100 or more, 500 or more, 1,000 or more, 2,000 or more, 4,000 or more, or 6,000 or more; and it may be 1,000,000 or less, 750,000 or less, 500,000 or less, 250,000 or less, 100,000 or less, 50,000 or less, 10,000 or less, 7,500 or less, 5,000 or less, 25,000 or less, 750 or less, or 250 or less.

Examples of the nonionic surfactant include an ether, ester, ester ether, alkanolamide, polyhydric alcohol, and amine oxide.

An example of the ether is a compound having an oxyalkylene group (preferably a polyoxyethylene group).

Examples of the ester are an ester of an alcohol and a fatty acid. Examples of the alcohol are a monovalent to hexavalent (particularly divalent to pentavalent) alcohol having 1 to 50 carbon atoms (particularly 10 to 30 carbon atoms) (for example, an aliphatic alcohol). An example of the fatty acid is a saturated or unsaturated fatty acid having 2 to 50 carbon atoms, particularly 5 to 30 carbon atoms.

An example of the ester ether is a compound obtained by adding an alkylene oxide (particularly ethylene oxide) to an ester of an alcohol and a fatty acid. Examples of the alcohol are a monovalent to hexavalent (particularly divalent to pentavalent) alcohol having 1 to 50 carbon atoms (particularly 3 to 30 carbon atoms) (for example, an aliphatic alcohol). An example of the fatty acid is a saturated or unsaturated fatty acid having 2 to 50 carbon atoms, particularly 5 to 30 carbon atoms.

An example of the alkanolamide is a compound formed of a fatty acid and an alkanolamine. The alkanolamide may be a monoalkanolamide or a dialkanolamide. An example of the fatty acid is a saturated or unsaturated fatty acid having 2 to 50 carbon atoms, particularly 5 to 30 carbon atoms. The alkanolamine may be an alkanol having 1 to 3 amino groups and 1 to 5 hydroxyl groups, having 2 to 50 carbon atoms, particularly 5 to 30 carbon atoms.

The polyhydric alcohol may be a divalent to pentavalent alcohol having 10 to 30 carbon atoms.

The amine oxide may be an oxide (for example, having 5 to 50 carbon atoms) of an amine (secondary amine or preferably tertiary amine).

The nonionic surfactant is preferably a nonionic surfactant having an oxyalkylene group (preferably a polyoxyethylene group). The number of carbon atoms of the alkylene group in the oxyalkylene group is preferably 2 to 10. The number of oxyalkylene groups in a molecule of the nonionic surfactant is generally preferably 2 to 100.

The nonionic surfactant is selected from the group consisting of an ether, ester, ester ether, alkanolamide, polyhydric alcohol, and amine oxide, and is preferably a nonionic surfactant having an oxyalkylene group.

The nonionic surfactant may be an alkylene oxide adduct of a linear and/or branched aliphatic (saturated and/or unsaturated) group, a polyalkylene glycol ester of a linear and/or branched fatty acid (saturated and/or unsaturated), a polyoxyethylene (POE)/polyoxypropylene (POP) copolymer (random or block copolymer), an alkylene oxide adduct of acetylene glycol, etc. Among them, the nonionic surfactant is preferably a surfactant such that the structures of the alkylene oxide addition moiety and polyalkylene glycol moiety are polyoxyethylene (POE) or polyoxypropylene (POP) or POE/POP copolymer (which may be a random or block copolymer) .

The nonionic surfactant also preferably has a structure free of an aromatic group due to environmental issues (biodegradability, environmental hormones, and the like).

In addition to the above, the nonionic surfactant may be sorbitan esters of linear and/or branched fatty acids (saturated and/or unsaturated), glycerin esters of linear and/or branched fatty acids (saturated and/or unsaturated), polyglycerin esters of linear and/or branched fatty acids (saturated and/or unsaturated), or sucrose esters of linear and/or branched fatty acids (saturated and/or unsaturated).

The nonionic surfactant may be the compound represented by formula:

R¹O-(CH₂CH₂O)ₚ-(R²O)_{q}-R³

wherein R¹ is an alkyl group having 1 to 22 carbon atoms, an alkenyl group having 2 to 22 carbon atoms, or an acyl group, R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is an integer of 2 or more, and
q is 0 or an integer of 1 or more.

R¹ preferably has 8 to 20 carbon atoms, particularly 10 to 18 carbon atoms. Preferred specific examples of R¹ include a lauryl group, tridecyl group, and oleyl group.

Examples of R² are a propylene group and butylene group.

In the nonionic surfactant, p may be a numeral of 3 or more (for example, 5 to 200). q may be a numeral of 2 or more (for example, 5 to 200). That is, -(R²O)_{q}- may form a polyoxyalkylene chain.

The nonionic surfactant may be a polyoxyethylene alkylene alkyl ether including a hydrophilic polyoxyethylene chain and a hydrophobic oxyalkylene chain (particularly a polyoxyalkylene chain) in the center. Examples of the hydrophobic oxyalkylene chain include an oxypropylene chain, an oxybutylene chain, a styrene chain, and the like, and among them, the oxypropylene chain is preferred.

Preferred specific examples of R¹ include, in addition to the above, an octyl group, a nonyl group, a trimethylnonyl group, and a stearyl group.

Specific examples of the nonionic surfactant include condensation products of ethylene oxide with hexylphenol, isooctylphenol, hexadecanol, oleic acid, an alkane (C₁₂-C₁₆) thiol, a sorbitan monofatty acid (C₇-C₁₉) or alkyl (C₁₂-C₁₈) amine, and the like.

Specific examples of the nonionic surfactants include, in addition to the above, a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, a lecithin derivative, etc. An example of the nonionic surfactant includes a polyoxyethylene alkyl ether, a polyoxyethylene polyoxypropylene alkyl ether, a polyoxyethylene polyoxybutylene alkyl ether, a polyoxyethylene polyoxypropylene glycol, a polyethyleneimine ethoxylate, or the like.

Preferred specific examples of the nonionic surfactants include a sorbitan fatty acid ester and a polyoxyethylene alkyl ether.

A proportion of a polyoxyethylene block can be 5 to 80% by mass, for example, 30 to 75% by mass, and particularly 40 to 70% by mass based on the molecular weight of the nonionic surfactant (copolymer).

An average molecular weight of the nonionic surfactant is generally 300 to 5,000, for example, 500 to 3,000.

The nonionic surfactant may be a mixture of a compound with an HLB (hydrophilicity - hydrophobicity balance) of less than 15 (particularly 5 or less) and a compound with an HLB of 15 or more. An example of the compound with an HLB of less than 15 is a sorbitan fatty acid ester. An example of the compound with an HLB of 15 or more is a polyoxyethylene alkyl ether. A weight ratio of the compound with an HLB of less than 15 to the compound with an HLB of 15 or more may be 90:10 to 20:80, for example, 85:15 to 55:45.

The nonionic surfactant may be used singly or in admixture of two or more thereof.

### (Cationic Surfactant)

The molecular weight of the cationic surfactant may be in a low molecular weight range (for example, a molecular weight of 2,000 or less and particularly 10,000 or less) or of a polymeric type (for example, a molecular weight of 2,000 or more). The molecular weight of the cationic surfactant may be 100 or more, 500 or more, 1,000 or more, 2,000 or more, 4,000 or more, or 6,000 or more, or it may be 1,000,000 or less, 750,000 or less, 500,000 or less, 250,000 or less, 100,000 or less, 50,000 or less, 10,000 or less, 7,500 or less, 5,000 or less, 25,000 or less, 750 or less, or 250 or less.

The cationic surfactant is preferably a compound free of an amide group.

The cationic surfactant may be an amine salt, quaternary ammonium salt, or oxyethylene-added ammonium salt. Specific examples of the cationic surfactant include, but are not limited to, an alkyl amine salt, amine salt type surfactants such as an amino alcohol fatty acid derivative, polyamine fatty acid derivative, and imidazoline, and quaternary ammonium salt type surfactants such as an alkyl trimethylammonium salt, dialkyl dimethylammonium salt, alkyl dimethyl benzyl ammonium salt, pyridinium salt, alkyl isoquinolinium salt, and benzethonium chloride.

Preferred examples of the cationic surfactant are the compounds of:

R⁴¹-N⁺(-R⁴²)(-R⁴³)(-R⁴⁴)X-

wherein R⁴¹, R⁴², R⁴³ and R⁴⁴ are hydrocarbon groups having 1 to 40 carbon atoms, and
X is an anionic group.

Specific examples of R⁴¹, R⁴², R⁴³ and R⁴⁴ are alkyl groups (for example, a methyl group, butyl group, stearyl group, and palmityl group). Specific examples of X are halogen (for example, chlorine), acids (for example, hydrochloric acid and acetic acid).

The cationic surfactant is particularly preferably a monoalkyltrimethylammonium salt (the number of carbon atoms of the alkyl is 4 to 40).

The cationic surfactant is preferably an ammonium salt. The cationic surfactant may be the ammonium salt represented, for example, by the following formula:

R⁷¹ₚ-N⁺R⁷²_{q}X⁻

wherein R⁷¹ is a C₁₂ or more (for example, C₁₂ to C₅₀) linear and/or branched aliphatic (saturated and/or unsaturated) group,
R⁷² is H or a C₁ to C₄ alkyl group, benzyl group, polyoxyethylene group (the number of oxyethylene groups is for example, 1 (particularly 2, especially 3) to 50)
(CH₃ and C₂H₅ are particularly preferred),
X is a halogen atom (for example), a C₁ to C₄ fatty acid base, p is 1 or 2, q is 2 or 3, and p + q = 4. The number of carbon atoms of R⁷¹ may be 12 to 50, for example, 12 to 30.

Specific examples of the cationic surfactant include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyldi(hydropolyoxyethylene)ammonium chloride, benzyldodecyldi(hydropolyoxyethylene)ammonium chloride, and N-[2-(diethylamino)ethyl]oleamide hydrochloride.

The cationic surfactant of a polymer type may be any of a variety of polymers (for example, a polyquaternium-1 to - 47) having a cationic group (for example, an ammonium group or quaternary ammonium group). Examples of the cationic surfactants of a polymer type include cationized natural products (particularly cationic sugars) such as cationized starch, cationized cellulose (for example, O-(2-hydroxy-3-(trimethylammonio)propyl hydroxyethyl cellulose chloride), cationized guar gum, cationized xanthan gum, and chitosan; polymers of cationic group-containing monomers such as aziridine, vinylimidazole, aminoalkyl methacrylate, N,N,N',N'-tetramethyl-2-butene-1,4-diamine, quaternary dimethylammonium ethyl methacrylate, diallyldimethylammonium chloride, dimethylaminopropylamine, and quaternary vinylimidazole.

### (Anionic Surfactant)

The molecular weight of the anionic surfactant may be in a low molecular weight range (for example, a molecular weight of 2,000 or less and particularly 10,000 or less), or of a polymeric type (for example, a molecular weight of 2,000 or more). The molecular weight of the anionic surfactant may be 100 or more, 500 or more, 1,000 or more, 2,000 or more, 4,000 or more, or 6,000 or more, and may be 1,000,000 or less, 750,000 or less, 500,000 or less, 250,000 or less, 100,000 or less, 50,000 or less, 10,000 or less, 7,500 or less, 5,000 or less, 25,000 or less, 750 or less, or 250 or less.

Examples of the anionic surfactant include an alkyl ether sulfate, alkyl sulfate, alkenyl ether sulfate, alkenyl sulfate, olefin sulfonate, alkanesulfonate, saturated or unsaturated fatty acid salt, alkyl or alkenyl ether carbonate, α-sulfone fatty acid salt, N-acylamino acid type surfactant, phosphate mono- or diester-type surfactant, and sulfosuccinic acid ester.

### (Amphoteric Surfactant)

The molecular weight of the anionic surfactant may be in a low molecular weight range (for example, a molecular weight of 2,000 or less and particularly 10,000 or less) or of a polymeric type (for example, a molecular weight of 2,000 or more). The molecular weight of the anionic surfactant may be 100 or more, 500 or more, 1,000 or more, 2,000 or more, 4,000 or more, or 6,000 or more, or may be 1,000,000 or less, 750,000 or less, 500,000 or less, 250,000 or less, 100,000 or less, 50,000 or less, 10,000 or less, 7,500 or less, 5,000 or less, 25,000 or less, 750 or less, or 250 or less.

Examples of the amphoteric surfactant includes alanines, imidazolinium betaines, amido betaines, and betaine acetate. Specific examples include lauryl betaine, stearyl betaine, lauryl carboxymethyl hydroxyethyl imidazolinium betaine, lauryl dimethylaminoacetate betaine, and fatty acid amidopropyl dimethylamino acetate betaine.

The surfactant may be one type or a combination of two or more of each of the nonionic surfactant, cationic surfactant, and amphoteric surfactants.

### (Amount of Surfactant)

The amount of the surfactant may be, for example, 1 part by mass or more, 2 parts by mass or more, 3 parts by mass or more, 5 parts by mass or more, 10 parts by mass or more, 15 parts by mass or more, 20 parts by mass or more, or 30 parts by mass or more, per 100 parts by mass of the polymer (A). The amount of the surfactant may be, for example, 50 parts by mass or less, 40 parts by mass or less, 30 parts by mass or less, 20 parts by mass or less, 15 parts by mass or less, 10 parts by mass or less, 5 parts by mass or less, or 3 parts by mass or less, per 100 parts by mass of the polymer (A). The amount of the surfactant may be preferably 2 to 30% parts by mass, and more preferably 5 to 15% parts by mass, per 100 parts by mass of the polymer (A).

### {Curing Agent}

The water-repellent composition may contain a curing agent (active hydrogen-reactive compound or active hydrogen-containing compound). The curing agent may be added to the water-repellent composition after the polymer (A) was obtained by polymerization.

The curing agent (crosslinking agent) in the water-repellent composition can favorably cure the polymer (A). The curing agent may be an active hydrogen-reactive compound or an active hydrogen-containing compound that reacts with active hydrogen or an active hydrogen-reactive group of the polymer (A). Examples of the active hydrogen-reactive compound include a polyisocyanate compound, an epoxy compound, a chloromethyl group-containing compound, a carboxyl group-containing compound, and a hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may be a polyisocyanate compound. The polyisocyanate compound is a compound having two or more isocyanate groups in one molecule. The polyisocyanate compound serves as a crosslinking agent. Examples of the polyisocyanate compound include an aliphatic polyisocyanate, alicyclic polyisocyanate, aromatic-aliphatic polyisocyanate, aromatic polyisocyanate, and derivatives of these polyisocyanates.

Examples of the aliphatic polyisocyanate include aliphatic diisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate 1,03-butylene diisocyanate, 2,4,4- or 2,2,4-trimethylhexamethylene diisocyanate, and 2,6-diisocyanatomethylcaproate, and aliphatic triisocyanates such as lysine ester triisocyanate, 1,4,8-triisocyanatooctane, 1,6,11-triisocyanatoundecane, 1,8-diisocyanato-4-(isocyanatomethyl)octane, 1,3,6-triisocyanatohexane, and 2,5,7-trimethyl-1,8-diisocyanato-5-(isocyanatomethyl)octane. These may be used singly or in combination of two or more thereof.

Examples of the alicyclic polyisocyanate include an alicyclic diisocyanate and alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of aromatic polyisocyanates include m-phenylenediisocyanate, p-phenylenediisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylenediisocyanate or a mixture thereof, triphenylmethane-4,4',4''-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in an aqueous solution and can be used in the same aqueous solution as the water-repellent composition.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include a phenol-based compound, lactam-based compound, aliphatic alcohol-based compound, and oxime-based compound. The polyisocyanate compounds can be used singly or in combination of two or more thereof.

The epoxy compound is a compound having an epoxy group. Examples of the epoxy compound include an epoxy compound having a polyoxyalkylene group, for example, a polyglycerol polyglycidyl ether and polypropylene glycol diglycidyl ether; and sorbitol polyglycidyl ether.

The chloromethyl group-containing compound is a compound having a chloromethyl group. Examples of the chloromethyl group-containing compound include chloromethyl polystyrene.

The carboxyl group-containing compound is a compound having a carboxyl group. Examples of the carboxyl group-containing compound include (poly)acrylic acid, and (poly)methacrylic acid.

Specific examples of the ketone group-containing compound include (poly)diacetone acrylamide, and diacetone alcohol.

Specific examples of the hydrazide compound include hydrazine, carbohydrazide, and adipic acid hydrazide.

Specific examples of the melamine compound include a melamine resin, and methyl etherified melamine resin.

### (Amount of Curing Agent)

The amount of the curing agent may be 0.1 parts by mass or more, 1 part by mass or more, 3 parts by mass or more, 5 parts by mass or more, 10 parts by mass or more, 15 parts by mass or more, or 20 parts by mass or more, per 100 parts by mass of the polymer (A). The amount of the curing agent may be 50 parts by mass or less, 40 parts by mass or less, 30 parts by mass or less, 20 parts by mass or less, 10 parts by mass or less, 5 parts by mass or less, or 1 part by mass or less, per 100 parts by mass of the polymer (A).

The wax, inorganic particles, aqueous medium, dispersant, surfactant, or curing agent listed above may be added after production of the polymer (A), or a monomer of the polymer (A) may be polymerized to produce the polymer (A) in the presence of the wax, inorganic particles, aqueous medium, dispersant, surfactant, or curing agent listed above.

### {Other Component}

The water-repellent composition may contain other component other than the aforementioned components. After the polymer (A) was produced, the other component may be added. Examples of other components include water- and/or oil- repellent agents, anti-slip agents, antistatic agents, antiseptic agents, ultraviolet absorbers, antibacterial agents, deodorants, and perfumes. These may be used singly or in combination of two or more thereof. In addition to the above components, examples of other components include texture modifiers, softening agents, antibacterial agents, flame retardants, coating material fixing agents, wrinkle-resistant agents, drying rate adjusters, crosslinking agents, film formation agents, compatibilizing agents, antifreezing agents, viscosity modifiers, ultraviolet absorbers, antioxidants, pH adjusters, insect repellents, antifoaming agents, anti-shrinkage agents, laundry wrinkle-resistant agents, shape retention agents, drape retention agents, ironing improving agents, whitening agents, bleaching agents, fabric softening clays, anti-dye transfer agents such as polyvinylpyrrolidone, polymer dispersants, soil release agents, scum dispersants, fluorescent brightening agents such as 4,4-bis(2-sulfostyryl)biphenyl disodium (Tinopearl CBS-X manufactured by Ciba Specialty Chemicals Corporation), dye fixing agents, anti-color fading agents such as 1,4-bis(3-aminopropyl)piperazine, stain removing agents, enzymes such as cellulase, amylase, protease, lipase, and keratinase as fiber surface modifiers, foam inhibitors, silk protein powder that can impart silky texture and functions such as moisture absorption and desorption properties, surface modifiers thereof, emulsified dispersions, and specifically K-50, K-30, K-10, A-705, S-702, L-710, FP series (Idemitsu Petrochemical Co., Ltd.), hydrolyzed silk liquid (Jomo), Silk Gen G Solble S (ICHIMARU FHARCOS Co., Ltd.), a nonionic polymer compound composed of alkylene terephthalate and/or alkylene isophthalate units and polyoxyalkylene units, for example, antifouling agent such as FR627 manufactured by GOO CHEMICAL CO., LTD. and SRC-1 manufactured by Clariant Japan K. K, can be compounded. These may be used singly or in combination of two or more thereof.

### (Antistatic agent)

Examples of the antistatic agent include cationic antistatic agents with cationic functional groups such as quaternary ammonium salts, pyridinium salts, primary-, secondary-, and tertiary-amino groups; anionic antistatic agents with anionic functional groups such as sulfonic acid salts or sulfuric acid ester salts, phosphonic acid salts, phosphoric acid ester salts; amphoteric antistatic agents such as alkyl betaine and derivatives thereof, imidazoline and derivatives thereof, alanine and derivatives thereof, and nonionic antistatic agents such as amino alcohols and derivatives thereof, glycerin and derivatives thereof, and polyethylene glycol and derivatives thereof. The antistatic agent may be an ion-electric conductive polymer obtained by polymerizing or copolymerizing a monomer having these cationic, anionic or amphoteric ion-electric conductive groups. These may be used singly or in combination of two or more thereof.

### (Antiseptic Agent)

The antiseptic agent may be used mainly to enhance antisepsis power and bactericidal power to maintain antiseptic during long-term storage. Examples of the antiseptic agents include isothiazolone-based organosulfur compounds, benzisothiazolone-based organosulfur compounds, benzoic acids, and 2-bromo-2-nitro-1,3-propanediol. The amount of antiseptic agent is preferably 0.0001 to 1% by mass relative to the total weight of the water-repellent composition. When the amount of antiseptic agent is the lower limit value of the aforementioned range or more, a sufficient effect of antiseptic agent added is obtained, and when the amount is the upper limit value or less, favorable storage stability of the water-repellent composition is obtained.

### (Ultraviolet Absorber)

The ultraviolet absorber is an agent that has a protection effect against ultraviolet rays, and is a component that absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### (Antibacterial Agents)

The antibacterial agent is a component that exhibits the effect of inhibiting bacteria from growing on fibers and further exhibits the effect of inhibiting generation of unpleasant odors derived from decomposition products of microorganisms. Examples of the antibacterial agent include cationic bactericidal agents such as quaternary ammonium salts, zinc bis-(2-pyridylthio-1-oxide), polyhexamethylene biguanidine hydrochloride, 8-oxyquinoline, and polylysine.

### (Deodorants)

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

### (Perfume)

The perfumes are not limited, and a list of usable perfume materials can be found in various literatures, including "Perfume and Flavor Chemicals", Vol. I and II, Steffen Arctander, Allured Pub. Co. (1994) and "Synthetic Perfume Chemistry and Product Knowledge", Genichi Indo, The Chemical Daily Co., Ltd. (1996) and "Perfume and Flavor Materials of Natural Origin", Steffen Arctander, Allured Pub. Co. (1994) and "Encyclopedia of Fragrance", edited by the Japan Perfume Association, Asakura Publishing Co., Ltd. (1989) and "Perfumery Material Performance V.3.3", Boelens Aroma Chemical Information Service (1996) and "Flower oils and Floral Compounds In Perfumery", Danute Lajaujis Anonis, Allured Pub. Co. (1993), each of which is incorporated herein as a part of the disclosure of the present description by reference.

### (Amount of Other Components)

The amount of the other components may be 0.1 parts by mass or more, 1 part by mass or more, 3 parts by mass or more, 5 parts by mass or more, 10 parts by mass or more, 15 parts by mass or more, or 20 parts by mass or more, per 100 parts by mass of the polymer (A). The amount of the other components may be 50 parts by mass or less, 40 parts by mass or less, 30 parts by mass or less, 20 parts by mass or less, 10 parts by mass or less, or 5 parts by mass or less, per 100 parts by mass of the polymer (A).

### <Production Method of Water-Repellent Composition>

The method for producing the water-repellent composition may include obtaining the polymer (A) by polymerizing the monomer (a1) in the presence of the polyether-modified polydimethylsiloxane (B). According to such a method, the water-repellent composition of the present disclosure can be obtained.

Examples of the polymerization methods include, for example, suspension polymerization and emulsion polymerization, and from the viewpoint of obtaining an emulsion of the polymer (A), the emulsion polymerization is preferably employed.

When employing the emulsion polymerization, first, the monomer (a1) (and the monomer (a2) compounded, if necessary) is totally or partially mixed with the polyether-modified polydimethylsiloxane (B), a surfactant, and a liquid medium to prepare a mixed liquid.

A proportion of the surfactant compounded may be, for example, 0.1 parts by mass or more and preferably 0.5 parts by mass or more, and for example, 10 parts by mass or less and preferably 5 parts by mass or less, per 100 parts by mass of the total amount of the monomer (a1) (and the monomer (a2) compounded, if necessary).

A proportion of the liquid medium compounded may be, for example, 100 parts by mass or more and preferably 150 parts by mass or more, and for example, 400 parts by mass or less and preferably 300 parts by mass or less, per 100 parts by mass of the total amount of monomer (a1) (and the monomer (a2) compounded, if necessary). The liquid medium may be any of those listed above. For example, the liquid medium may be water. In emulsion polymerization, an organic solvent may be further added. The organic solvent may be any of the liquid medium listed above. The organic solvent may be a water-soluble glycol-based solvent, such as ethylene glycol or propylene glycol.

In emulsion polymerization, the organic acid listed above may be added. For example, the organic acid may be a carboxylic acid such as acetic acid. The organic acid may be, for example, 0.01 part by mass or more or 0.1 part by mass or more, and may be 1 part by mass or less or 0.5 parts by mass or less, per 100 parts by mass of the total amount of monomer (a1) (and the monomer (a2) compounded, if necessary).

Next, an emulsifier may be added to this mixed liquid.

As the emulsifier, known emulsifiers may be used, for example, cationic emulsifiers and anionic emulsifiers.

As the emulsifier, the above-described surfactants may also be used.

The emulsifier may contain a reactive emulsifier. In the case of an emulsifier containing a reactive emulsifier, the polymer (A) results in formation of polymer containing a constituent unit derived from the reactive emulsifier.

The polymer (A) that would be the polymer containing a constituent unit derived from the reactive emulsifier improves product stability of a water dispersion (water-repellent composition) without reduction of water-repellency.

The reactive emulsifier is an emulsifying dispersant having radical reactivity, i.e., an emulsifier having one or more polymerizable unsaturated groups in the molecule, and is an emulsifier that can be copolymerized with the aforementioned monomers.

Examples of the reactive emulsifiers include, for example, the reactive emulsifier described in JP2017-25440A.

The reactive emulsifier which would be the above-described reactive emulsifier improves product stability of a water dispersion (water-repellent composition) without water-repellency being reducible. Examples of the above-described reactive emulsifiers include, for example, a polyoxyethylene alkylphenol.

The emulsifier can be used singly or in combination of two or more thereof.

A proportion of the emulsifier compounded may be, for example, 0.5 parts by mass or more and, for example, 10 parts by mass or less, per 100 parts by mass of the total amount of monomer (a1) (and the monomer (a2) compounded, if necessary).

The proportion of the emulsifier compounded may be, for example, 0.1% by weight or more and, for example 5% by weight or less, relative to the water-repellent composition.

Then, after the above-described components have been mixed, the mixed liquid is stirred, and ultrasonic wave is applied to the mixed liquid to emulsify the mixed liquid.

As a method of stirring, for example, a disperser such as a homomixer, an ultrasonic homogenizer, a pressurized homogenizer, a milder, or a pressurized porous membrane disperser, is used, and preferably a homomixer is used.

The stirring conditions are set appropriately, and when a homomixer is used, the revolution per minute is set to, for example, 500 rpm or more and, for example, 10,000 rpm or less. A stirring time is, for example, 1 minutes or longer and, for example, 30 minutes or shorter and preferably 25 minutes or shorter. A stirring temperature is, for example, 50°C or higher and, for example, 100°C or lower.

Next, when preparing the above-described mixed liquid and partially compounding a monomer to this mixed liquid, the residual moieties of the above monomer are compounded.

Next, to this mixed liquid is compounded a polymerization initiator.

Examples of the polymerization initiators include, for example, azo compounds such as azobisisobutylamidine dihydrochloride and azobisisobutyronitrile, for example, water-soluble polymerization initiators such as persulfates such as potassium persulfate and ammonium persulfate, and, for example, oil-soluble polymerization initiators such as organic peroxides such as benzoyl peroxide, di-t-butyl peroxide, lauryl peroxide, cumene hydroperoxide, t-butyl peroxypivalate and diisopropyl peroxydicarbonate, and preferably include the azo compounds and more preferably azobisisobutyronitrile.

A proportion of the polymerization initiator compounded may be, for example, 0.01 parts by mass or more, for example, 10 parts by mass or less, per 100 parts by mass of the total amount of monomer (a1) (and monomer (a2) compounded, if necessary).

If necessary, a chain transfer agent can also be compounded into this mixed liquid.

Examples of the chain transfer agents include, for example, mercaptan group-containing compounds such as lauryl mercaptan, thioglycol, and thioglycerol (particularly alkyl mercaptans (for example, having 1 or more and 30 or less carbon atoms)), inorganic salts such as sodium hypophosphite and sodium hydrogen sulfite, and preferably lauryl mercaptan.

A proportion of the chain transfer agent compounded may be, for example, 0.01 parts by mass or more and, for example, 10 parts by mass or less, per 100 parts by mass of the total amount of monomer (a1) (and monomer (a2) compounded, if necessary).

Then, this mixed liquid is heated to polymerize the monomers.

The heating conditions are a heating temperature of, for example, 40°C or higher and, for example, 80°C or lower, and a heating time of, for example, 1 hour or longer and, for example, 6 hours or shorter.

This results in an emulsion of the polymer (A), and a water-repellent composition containing the polyether-modified polydimethylsiloxane (B) and the polymer (A) (emulsion).

### <Applications of Water-Repellent Composition>

Examples of applications of the water-repellent composition in the present disclosure include an external treatment agent (surface-treating agent) or internal treatment agent, repellent (water-repellent agent, oil-repellent agent or water- and oil-repellent agent, or the like, particularly water-repellent agent), soil resistant agent, soil release agent, release agent, and mold release agent (external mold release agent or internal mold release agent).

### <Production Method of Treated Product>

The method for producing a treated product in the present disclosure includes applying the water-repellent composition of the present disclosure to a substrate.

### [Treated Product]

Examples of the substrate treated with the water-repellent composition of the present disclosure include textile products, stone, filters (for example, electrostatic filters), dust masks, components of fuel cells (for example, gas diffusion electrodes and gas diffusion supports), glass, paper, wood, leather, fur, asbestos, brick, cement, metals and oxides, ceramic products, plastics, painted surfaces, and plasters. Examples of the textile products include various products, including animal and vegetable natural fibers such as cotton, hemp, wool, and silk; synthetic fibers such as polyamide, polyester, polyvinyl alcohol, polyacrylonitrile, polyvinyl chloride, and polypropylene; semi-synthetic fibers such as rayon and acetate; inorganic fibers such as glass fiber, carbon fiber, and asbestos fiber; or mixed fibers thereof. As an example of a substrate to be treated with the water-repellent composition, a woven or knitted fabric will be described in detail.

### (Woven or Knitted Fabric)

### • Production method of woven or knitted fabric

A woven or knitted fabric can be obtained by weaving or knitting the aforementioned combined filament-interlaced yarns to obtain a greige fabric and then subjecting it to post-processing and water-repellent treatment. The weaving or knitting may be carried out by using a known weaving machine or knitting machine, and the preparation process prior to weaving or knitting can also be carried out by using known equipment.

In the post-processing, the greige fabric first undergoes scouring and relaxing. The scouring and relaxing may be carried out continuously or in a batch manner at a temperature of 80 to 130°C. The scouring and relaxing are usually preferably carried out in a batch manner at 100°C or lower, and in particular, it is preferably carried out by using a high-pressure liquid flow dyeing machine equipped with a jet nozzle.

After the scouring and relaxing, the woven or knitted fabric undergoes presetting. The presetting is usually carried out by dry heat treatment at 170 to 200°C for 30 to 120 seconds by using a pin tenter. After the presetting, the fabric is dyed according to an ordinary method, followed by final setting if necessary.

After the post-processing, the woven or knitted fabric may undergo water-repellent treatment. In the water-repellent treatment, first, an aqueous solution containing a water-repellent agent (the aqueous solution may be the water-repellent composition in the present disclosure) is prepared. Then, by a padding method, spray method, kiss roll coater method, slit coater method, or the like, the aforementioned aqueous solution can be applied to the woven or knitted fabric after the above post-processing, and the resultant may undergo dry heat treatment at 105 to 190°C for 30 to 150 seconds. The above aqueous solution may contain a crosslinking agent, softener, antistatic agent, and the others, as necessary. After the water-repellent treatment, the woven or knitted fabric may be subjected to calendering processing in order to further improve its water-repellent performance.

The woven or knitted fabrics are suitably used for apparel applications, particularly for uniform wear applications, ladies' wear applications, and sportswear applications.

### • Stacked fabric

The woven or knitted fabric of the present disclosure may be provided in the form of a stacked fabric having a moisture permeable and waterproof layer on one side of the woven or knitted fabric. The moisture permeable and waterproof layer may be stacked directly on the woven or knitted fabric, or it may be stacked above the woven or knitted fabric via an adhesive layer. When the stacked fabric of the present disclosure is used for apparel applications and the like, it is arranged so that the woven or knitted fabric side is exposed to rainwater and the like.

### • Moisture permeable and waterproof layer

The moisture permeable and waterproof layer is a layer that covers one side of the woven or knitted fabric and is formed by a resin having a waterproof property and moisture permeability.

The moisture permeable and waterproof layer may be formed by directly coating a woven or knitted fabric with a resin (resin for forming the moisture permeable and waterproof layer) or the layer may be stacked above one side of the woven or knitted fabric via the adhesive layer described below. In the present disclosure, combined filament-interlaced yarns with fine protrusions due to loops or slacks are used for the woven or knitted fabric. Therefore, the protrusions are firmly entangled with the adhesive layer or the moisture permeable and waterproof layer to exhibit an anchoring effect, so that it is very difficult for the woven or knitted fabric and the moisture permeable and waterproof layer to peel from each other. In a case in which an ordinary woven or knitted fabric (a woven or knitted fabric in which the aforementioned protrusions are not sufficiently retained on its surface) is used, the anchoring effect may not be sufficiently exhibited, whereby the woven or knitted fabric and the moisture permeable and waterproof layer easily peel from each other.

A resin for forming the moisture permeable and waterproof layer is not limited, and preferably contains a polyurethane resin as the main component, and for example, the resin preferably contains a polyurethane resin in an amount of 80% by mass or more. The polyurethane resin is generally suitable for forming a resin layer with moisture permeability and a waterproof property. Among them, a microporous type of polyurethane is preferred, taking moisture permeability into consideration. However, in a case in which the resin is likely to be exposed to rainfall for a long period of time or is expected to be used repeatedly via laundry or the like, a non-porous type of moisture permeable urethane may be used instead of the microporous type.

As the polyurethane resin, a conventionally known polyurethane resin obtained by reacting a polyisocyanate component with a polyol component can be employed.

The moisture permeable and waterproof layer may have a microporous structure or a non-porous structure. In the case of the microporous structure, inorganic fine powder can be contained in the moisture permeable and waterproof layer in order to secure desired moisture permeability.

Examples of the inorganic fine powder include fine powder made of, for example, silicon dioxide, aluminum dioxide, or titanium dioxide. The average primary particle size of the inorganic fine powder is preferably about 7 to 40 nm. The amount of inorganic fine powder is preferably 3 to 50% by mass relative to the total amount of moisture permeable and waterproof layer, and it is preferably 5 to 50% by mass.

The thickness of the moisture permeable and waterproof layer is preferably 5 µm or thicker and more preferably 10 to 30 µm. Within the above range of thickness, a waterproof property and moisture permeability are well-balanced, which is advantageous in terms of texture and tear strength.

### • Adhesive layer

The stacked fabric preferably includes an adhesive layer. In other words, the woven or knitted fabric and the moisture permeable and waterproof layer are preferably stacked via an adhesive layer. The reason therefor will be described below. In the present disclosure, the woven or knitted fabric is employed that has on its surface fine protrusions due to loops or slacks, as described above. Therefore, the protrusions are firmly entangled with the adhesive layer to exhibit an anchoring effect, so that it is very difficult for the woven or knitted fabric and the moisture permeable and waterproof layer to peel from each other.

Moreover, when the moisture permeable and waterproof layer is directly stacked on the aforementioned woven or knitted fabric, for example, by a coating method, the protrusions on the surface of the woven or knitted fabric may penetrate thorough the moisture permeable and waterproof layer, which results in formation of pinholes and may thus cause poor water resistance and strength. There also arises a concern that coating will not be carried out in uniform manner, resulting in uneven thickness in the moisture permeable and waterproof layer. In order to prevent this, when a surface of the woven or knitted fabric is smoothed by a calendering processing, for example, water-repellency may decrease due to reduction in the protrusions or air retention layer. Therefore, in the present disclosure, the woven or knitted fabric and the moisture permeable and waterproof layer are preferably stacked via an adhesive layer.

A type of the adhesive for forming the adhesive layer is not limited, but is preferably an adhesive excellent in miscibility with the moisture permeable and waterproof layer. For example, when a resin including a polyurethane resin as the main component is selected as a resin for forming the moisture permeable and waterproof layer, an adhesive layer composed of a polyurethane-based adhesive is preferably employed. The polyurethane-based adhesive used may be any one of etheric, esteric, polycarbonate-based adhesives, and the others; however, in view of imparting excellent moisture permeability, the etheric adhesive is preferably included.

The adhesive layer may be formed on the entire surface of one side of the woven or knitted fabric, or may be formed in pattern in view of moisture permeability, texture, or the like. The patterned form is not limited, and may be dotted, linear, lattice, checkered, tortoiseshell patterns, and the others, and any of these patterns is preferably uniformly distributed throughout the entire surface.

The thickness of the adhesive layer is preferably about 10 to 100 µm and more preferably 20 to 80 µm. The thickness less than 10 µm makes it difficult to provide a durable stacked fabric even when the area occupied by the adhesive is large, and the thickness exceeding 100 µm increases a production cost and also leads to a tendency that further adhesiveness cannot be expected, both of which are undesirable.

### • Textile fabric for lining

In the stacked fabric of the present disclosure, a textile fabric for lining may be stacked on the moisture permeable and waterproof layer (the side of the moisture permeable and waterproof layer opposite from the side thereof on which the woven or knitted fabric of the present disclosure is stacked). The moisture permeable and waterproof layer can be protected by the textile fabric for lining, thereby rendering the layer further excellent in waterproof properties (water pressure resistance) and strength. Moreover, stacking the textile fabric for lining can inhibit elongation of the entire stacked fabric. Therefore, the protrusions can be inhibited from their reduction resulting from a pull on the protrusions of the combined filament composite yarns by elongation of the woven or knitted fabric due to a finishing process after stacking, tension upon wearing, or the like, and the aforementioned water-repellency can be highly maintained. Moreover, stacking the textile fabric for lining further improves the water-repellency.

Examples of textile fabrics for lining include various types of woven fabrics and knitted fabrics. Among these, knitted fabrics are more suitable than woven fabrics because fiber yarns constituting the knitted fabrics easily protrude from their surfaces to create a less flat surface condition, and thus, the anchoring effect is more exhibited, thereby making it difficult for the fabric to peel from the moisture permeable and waterproof layer. In particular, a tricot knitted fabric, elasticity of which is inhibited compared to knitted fabrics having other structures, is preferred, because their stitch voids become not too large, allowing the water-repellency to be exhibited more effectively. The tricot knitted fabric is also preferred for the following reason: a long greige tricot knitted fabric with fewer joints can be obtained upon knitting, which makes it possible for the fabric to be uniformly stacked on the moisture permeable and waterproof layer.

A material of fibers constituting the textile fabric for lining is not limited and can be appropriately selected; however, it is preferably a nylon fiber. The reason for this is as follows: a problem with polyester fibers and the like, for which disperse dyes are used, is migration and sublimation of the disperse dyes to the moisture permeable and waterproof layer, and acid dyes are generally used for nylon fibers, thereby hardly causing such a problem. The form (long fiber, staple fiber, or spun yarn) of the constituent fiber of the textile fabric for lining, or fineness thereof is not limited, and can be appropriately selected such that the effect of the present disclosure is not impaired.

### • Characteristics of stacked fabric

The stacked fabric has an excellent waterproof property. As for a suitable example of the waterproof property of the stacked fabric of the present disclosure, the water level is, for example, 10,000 mm or more, preferably 15,000 mm or more, further preferably 16,000 mm or more, and particularly preferably 20,000 mm or more, as measured according to the water resistance test specified in the A method (low water pressure method) in JIS L 1092: 2009. The upper limit value of the water level is not limited, and is, for example, 50,000 mm or 25,000 mm.

The stacked fabric has excellent moisture permeability. As for a suitable example of the moisture permeability of the stacked fabric of the present disclosure, the moisture permeability is, for example, 10,000 g/m²·24h or more, preferably 15,000 g/m²·24h or more, and further preferably 20,000 g/m²·24h or more, as measured according to the B-1 method (potassium acetate method) in JIS L 1099: 2012. The upper limit value of the moisture permeability is not limited, and is, for example, 40,000 g/m²·24h or 35,000 g/m²·24h.

The stacked fabric inhibits interlayer peeling between the woven or knitted fabric and the moisture permeable and waterproof layer. As for a suitable example of the peel strength between the woven or knitted fabric and the moisture permeable and waterproof layer in the stacked fabric of the present disclosure, the peel strength is, for example, 5 N/2.54 cm or more, preferably 5 to 50 N/2.54 cm, further preferably 6 to 30 N/2.54 cm, and particularly preferably 9 to 25 N/2.54 cm, as measured according to the method in JIS L 1089. In order to fall the peel strength in the above range, a woven or knitted fabric without calendering processing may be employed, or an adhesive layer may be provided, for example.

### • Production method of stacked fabric

Methods for producing a stacked fabric are not limited, but include for example, the first production method and second production method described below.

The first production method: it comprises the step of applying a resin for the moisture permeable and waterproof layer to the surface of a woven or knitted fabric to form the moisture permeable and waterproof layer.

The second production method: it comprises the step of forming an adhesive layer on a woven or knitted fabric or a moisture permeable and waterproof layer, and the step of bonding the woven or knitted fabric and the moisture permeable and waterproof layer via an adhesive layer.

The woven or knitted fabric used for stacked fabrics (i.e., the woven or knitted fabrics of the present disclosure described above) preferably retain protrusions on the fabric surface as much as possible. For example, when a woven or knitted fabric undergoes calendering processing in order to facilitate coating processing or the like, fine protrusions of combined filament-interlaced yarns may be crushed to a flat surface, whereby a specific water drop rolling angle may not be achieved. Furthermore, as a result of the calendering processing, the above-described air retention layer cannot be sufficiently retained, whereby the desired water-repellency may not be attained. Therefore, conditions for calendering processing are preferably sufficiently taken into account, and for example, when a woven or knitted fabric is subjected to calendering processing, ordinary conditions (for example, a temperature of 130°C or higher, and a linear pressure of 200 to 20,000 N/cm) may be employed so that the protrusions of the combined filament-interlaced yarns are not reduced too much. Calendering processing may also be carried out without heating.

In the first production method, examples of methods for applying a resin for the moisture permeable and waterproof layer to the surface of the woven or knitted fabric include a coating method. In the coating method, a knife coater or comma coater can be used. In view of allowing a moisture permeable and waterproof layer to have excellent moisture permeability, it is preferably obtained by a wet method.

In the second production method, examples of methods for forming an adhesive layer on a woven or knitted fabric or a moisture permeable and waterproof layer include a lamination method. In the lamination method, a method involving use of a resin solution or a method involving hot melt can be employed to form the adhesive layer. First, a clearance is created on the surface of a release material (release paper, release fabric, or release film, and the like); a resin composition for forming a moisture permeable and waterproof layer (for example, a resin composition containing a resin and an organic solvent) is applied thereto while adjusting its thickness, to form a moisture permeable and waterproof layer; and the moisture permeable and waterproof layer is heat treated to completely react to thereby obtain a film. The release material can be appropriately removed after having bonded or aging.

An adhesive layer is then formed on the woven or knitted fabric or the moisture permeable and waterproof layer. For example, in the method involving use of a resin solution, a polyurethane resin solution may be applied to the entire surface of the layer or applied to the surface in a pattern, and the polyurethane resin solution may be a two-pack curable type and have an adjusted viscosity within a range of 500 to 5000 mPa·s. Thereafter, the applied solution is then dried to form the adhesive layer, the woven or knitted fabric and the moisture permeable and waterproof layer are bonded to each other via the adhesive layer, and undergo compression bonding or thermal compression bonding, whereby the second production method can be implemented.

In the case of hot melt, on the other hand, a moisture-curable resin, which reacts with moisture in the air, is preferably used, and those that melt in a temperature range of about 80 to 150°C are more suitably used in practice. In this case, the hot melt resin is first melted while taking into consideration the melting point of the resin, its viscosity when melted and the others. The surface of the woven or knitted fabric or the moisture permeable and waterproof layer is then coated with the molten resin, and the coated fabric or layer is allowed to mature while cooled at ordinary temperature to form an adhesive layer. Thereafter, the woven or knitted fabric and the moisture permeable and waterproof layer are bonded to each other via the adhesive layer, and undergo compression bonding, whereby the second production method can be implemented.

Among these production methods, the second production method is preferably employed. In a case in which the moisture permeable and waterproof layer is stacked using the coating method, there is a concern that the moisture permeable and waterproof layer may create pinholes due to fine protrusions on the surface of the woven or knitted fabric, which tends to reduce water resistance pressure. Moreover, when the woven or knitted fabric is subjected to calendering processing in an attempt to form a uniform moisture permeable and waterproof layer, there is a concern that desired water-repellency may not be achieved due to reduction of the protrusions or air retention layer, and calendering conditions are thus required to be examined separately, which may result in that the process itself may become complicated.

Thereafter, the textile fabric for lining can be stacked on the moisture permeable and waterproof layer using a known and appropriate method.

### • Applications of stacked fabric

The stacked fabric has excellent water-repellency, and moisture permeability and a waterproof property, and the moisture permeable and waterproof layer does not peel off even in harsh environments. Accordingly, the stacked fabric is suitable in the fields such as uniform clothing, sportswear clothing, outdoor products, and the like, all of which are used outdoors.

### [Treatment Method]

The water-repellent composition of the present disclosure can be applied as a treatment agent (particularly a surface-treating agent) to a substrate by conventionally known methods. A method for applying the water-repellent composition in the present disclosure may include dispersing the water-repellent composition in an organic solvent or water to dilute it therewith, if necessary, and allowing the resultant to adhere to the surface of the substrate by any known methods such as dip coating, spray coating, or foam coating, and then drying it. After drying, a textile product is obtained with a solid component in the water-repellent composition adhered. If necessary, a suitable crosslinking agent may be applied in combination with the water-repellent composition, followed by curing. Furthermore, the water-repellent composition of the present disclosure may be used in combination with various additives such as water- and/or oil-repellent agents, anti-slip agents, antistatic agents, texture modifiers, softening agents, antibacterial agents, flame retarders, coating material fixing agents, wrinkle-resistant agents, drying rate adjusters, crosslinking agents, film formation agents, compatibilizing agents, antifreeze agents, viscosity adjusters, ultraviolet absorbers, antioxidants, pH adjusters, insect repellents, and antifoaming agents. Examples of the various additives may be the same as those described in "Other components" for the water-repellent composition hereinabove. The concentration of the polymer (A) in the treatment agent to be brought into contact with a substrate may be appropriately changed according to applications, but may be 0.01 to 10% by mass, for example, 0.05 to 5% by mass.

A method for treating a pulp substrate can be an internal addition treatment method for adding a repellent to pulp before papermaking (for example, a pulp slurry), or an external addition treatment method for applying a repellent to pulp after papermaking (for example, a pulp product). Examples of the internal addition treatment methods include mixing, immersion, and the like, which may include the step of adding the repellent to the pulp slurry followed by stirring and mixing. Examples of the external addition treatment methods include spraying, coating, and the like, and specific examples thereof include a pond type two-roll size press, a gate roll type, a rod metering size press, and the like. The treatment may be the external addition treatment or the internal addition treatment. For example, when the pulp substrate is paper, the paper may be coated, or a solution may be adhered or sprayed to the paper, or the paper may be mixed with a pulp slurry prior to papermaking and treated.

### [Textile Product]

A textile product as a substrate may be any of various products, and examples thereof include fabric products and paper products. The textile product which is the substrate is also called a fibrous substrate.

Examples of the fabric product include: flora and fauna natural fibers such as cotton, hemp, wool, and silk; synthetic fibers such as a polyamide, polyester, polyvinyl alcohol, polyacrylonitrile, polyvinyl chloride, and polypropylene; semisynthetic fibers such as rayon and acetate; inorganic fibers such as a glass fiber, carbon fiber, and asbestos fiber or a mixture of these fibers. Fabric products include woven fabrics, knitted fabrics, and nonwoven fabrics, fabrics in clothing form and carpets. Fibers, yarns and intermediate textile products (for example, slivers or coarse yarns) before being formed into fabrics may also undergo treatments.

Examples of the paper product include: papers made of bleached or unbleached chemical pulps such as kraft pulp or sulfite pulp; bleached or unbleached high-yield pulps such as crushed wood pulp, mechanical pulp, or thermomechanical pulp; waste paper pulps such as waste newspaper, waste magazines, waste cardboards, or deinked waste paper; containers made of paper, and formed articles made of paper. Specific examples of the paper product include food packaging paper, base paper for gypsum board, coated base paper, medium quality paper, general liner and core, neutral pure white roll paper, neutral liner, rust-proof liner and metal joined paper, kraft paper, neutral printing and writing paper, neutral coated base paper, neutral PPC paper, neutral thermal paper, neutral pressure sensitive base paper, neutral inkjet paper and neutral information paper, and molded paper (molded containers).

The water-repellent composition can be applied to the textile products by any of the methods known for treating textile products (for example, fabrics) with liquids. The textile product may be immersed in a water-repellent composition, or the solution may be adhered to or sprayed on the textile product. The treated textile product is dried and subjected to curing, preferably by heating, in order to develop water-repellency. The heating temperature may be, for example, 80°C to 250°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes.

Alternatively, the water-repellent composition may be applied to the textile product by a cleaning method, for example, in laundry application or dry cleaning methods.

The textile products to be treated may be fabrics, including woven textiles (woven fabrics), knitted textiles (knitted fabrics) and nonwoven fabrics, fabrics in clothing form and carpets. The textile products may also be fibers or yarns or intermediate textile products (for example, sliver or coarse yarn). The water-repellent composition of the present disclosure is particularly effective in rendering textile products (for example, synthetic fibers) water-repellent.

Fibers constituting the textile product may be natural, synthetic, semi-synthetic, regenerated or inorganic fibers. Fibers may be used singly or in combination of two or more thereof.

Examples of the natural fibers include cellulosic fibers such as cotton, flax, and pulp, chitin, chitosan, wool, and silk. Specific examples of the wood pulp include mechanical pulp such as ground wood pulp (GP), pressurized ground wood pulp (PGW), and thermomechanical pulp (TMP), chemical pulp such as high-yield softwood unbleached kraft pulp (HNKP; N material), softwood bleached kraft pulp (NBKP; N material, NB material), hardwood unbleached kraft pulp (LUKP; L material), hardwood bleached kraft pulp (LBKP, L material), waste paper pulp such as deinking pulp (DIP) and waste pulp (WP), and semi-chemical pulp (CP).

Examples of the synthetic fibers include polyesters such as polyethylene terephthalate, polybutylene terephthalate, polytrimethylene terephthalate, and copolymerized polyesters; polyolefins such as linear low density polyethylene, low density polyethylene, high density polyethylene, and polypropylene; polyamides such as nylon 6, nylon 66, nylon 610, and nylon 46; and acrylic fibers such as polyacrylonitrile; polyvinyl alcohol, polyurethane, and polyvinyl chloride.

Examples of the semi-synthetic fibers include acetate and triacetate. Examples of the regenerated fibers include rayon, cupra, polynosic rayon, lyocell, and tencel. Examples of inorganic fibers are a glass fiber and carbon fiber.

Alternatively, the textile product may be leather. In order to render the leather water- and oil-repellent, the polymeric product in the form of an aqueous solution or aqueous emulsion may be applied to the leather at various stages of leather processing, for example, during a wet processing of the leather or during a finishing of the leather.

Alternatively, the textile product may be paper. The polymeric product may be applied to paper that has been produced, or may be applied at various stages of papermaking, for example, during drying the paper.

The term "treatment" means applying the water-repellent composition to a substrate by dipping, spraying, coating, etc. The treatment allows the polymer (A) and the polyether-modified polydimethylsiloxane (B), which are active ingredients of the water-repellent composition, to penetrate into an inside of the substrate and/or adhere to a surface of the substrate. In other words, the treatment provides a substrate (for example, a textile product) to which the polymer (A) and the polyether-modified polydimethylsiloxane (B) in the water-repellent composition of the present disclosure are adhered.

### [Pretreatment of Textile Product]

The textile product may be pretreated prior to treatment with the water-repellent composition of the present disclosure. When a pretreated textile product is treated with the water-repellent composition, the textile product after the treatment with the water-repellent composition has excellent fastness.

Examples of pretreatment of textile products include cationization treatments by reaction with reactive quaternary ammonium salts or the like, anionization treatments such as sulfonation, carboxylation and phosphorylation, acetylation treatment after anionization treatment, benzoylation treatment, carboxymethylation treatment, grafting treatment, tannin acid treatment, and polymer coating treatment.

The method for pretreating the textile product is not limited, and the textile product can be pretreated by any of conventionally known methods. The method for pretreatment may include dispersing a pretreatment liquid in an organic solvent or water to dilute it therewith, as necessary, and allowing the diluted pretreatment liquid to adhere to the surface of the textile product by any known methods such as dip coating, spray coating, foam coating, and the like, and then drying the resultant. The pH, temperature, etc. of the pretreatment liquid may be adjusted according to an extent of treatment desired. As an example of the method for pretreating a textile product, a method for pretreating the textile product with a hydrocarbon-based water-repellent agent will be described in detail.

The method for pretreating a textile product may include the step of imparting, to a fiber, at least one functional group (hereinafter may be referred to as "specific functional group") selected from a monovalent group represented by - SO₃M¹ wherein M¹ represents a monovalent cation, a monovalent group represented by -COOM² wherein M² represents a monovalent cation, and a monovalent group represented by - O-P(O)(OX¹)(OX²) wherein X¹ and X² each independently represent a hydrogen atom or an alkyl group having 1 to 22 carbon atoms.

Examples of M¹ include H, K, Na, or an ammonium ion which may have a substituent. Examples of M² include H, K, Na, or an ammonium ion which may have a substituent. When X¹ or X² is an alkyl group, it is preferably an alkyl group having 1 to 22 carbon atoms and more preferably an alkyl group having 4 to 12 carbon atoms.

Fibers containing the aforementioned specific functional groups (hereinafter, also referred to as "functional group-containing fibers") can be prepared, for example, by the following methods.
(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.
(ii) A fiber is provided in which the above specific functional group has been directly introduced into the material forming the fiber.

In the case of (i), for example, a functional group-containing fiber can be obtained by treating the fiber material with a pretreatment liquid containing one or more compounds having the above specific functional group, namely, by the step of introducing the functional group.

Raw materials of the fiber material are not limited, and examples thereof include natural fibers such as cotton, hemp, silk, and wool, semi-synthetic fibers such as rayon and acetate, synthetic fibers such as polyamides (nylon and the like), polyester, polyurethane, polypropylene, and composite fibers and blended fibers thereof. The fiber material may be in any form of fibers (tows, slivers, and the like), yarns, knitted fabrics (including interknitted fabrics), woven fabrics (including interwoven fabrics), nonwoven fabrics, papers, and the like.

In the present embodiment, in view of favorable water-repellency of the textile products to be obtained, fiber materials containing a polyamide and polyester as a raw material are preferably used, and in particular, nylons such as nylon 6 and nylon 6,6, polyesters such as polyethylene terephthalate (PET), polytrimethyl terephthalate, and polylactic acid, and mixed fibers containing these materials are preferably used.

A Phenolic polymer can be used as the compound having -SO₃M¹ described above. Examples of such a phenolic polymer include those containing at least one compound represented by the following general formula: 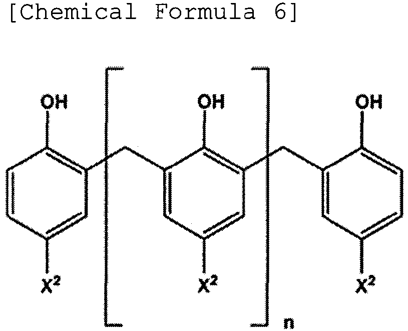 wherein in formula (2), X² represents -SO₃M³, wherein M³ represents a monovalent cation, or a group represented by the following general formula, and n is an integer of 20 to 3,000; 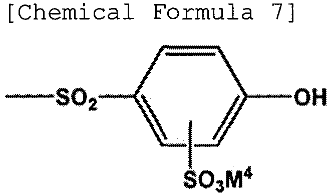 wherein M⁴ represents a monovalent cation.

Examples of M³ include H, K, Na or an ammonium ion that may have a substituent.

Examples of M⁴ include H, K, Na or an ammonium ion which may have a substituent.

The compounds represented by the general formula above may be, for example, formalin condensates of phenol sulfonic acid and formalin condensates of sulfonated bisphenol S.

Examples of the compound having -COOM² above include a polycarboxylic acid-based polymer.

The polycarboxylic acid-based polymer used can be, for example, a polymer synthesized by using acrylic acid, methacrylic acid, maleic acid, and the like as monomers by a conventionally known radical polymerization method, or a commercially available polymer.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. In this case, alcohols such as methanol, ethanol, and isopropyl alcohol, or aqueous solvents such as acetone may be added to the aqueous solution of the above monomer and/or salt thereof. Examples of the radical polymerization initiator include persulfates such as potassium persulfate, sodium persulfate, and ammonium persulfate; redox-based polymerization initiators such as a combination of a persulfate with sodium bisulfite; hydrogen peroxide, and water-soluble azo-based polymerization initiators. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl monomers such as ethylene, vinyl chloride, and vinyl acetate, acrylamide, acrylates, and methacrylates. The acrylates and methacrylates preferably have a hydrocarbon group having 1 to 3 carbon atoms that may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, and propyl methacrylate. These copolymerizable monomers may be used singly or in combination of two or more thereof.

The carboxyl group in the polycarboxylic acid-based polymer may be free or neutralized with an alkali metal, an amine-based compound, or the others. Examples of the alkali metal include sodium, potassium, and lithium, and examples of the amine-based compound include ammonia, monoethanolamine, diethanolamine, and triethanolamine.

A weight average molecular weight of the polycarboxylic acid-based polymer is preferably 1,000 to 20,000 and more preferably 3,000 to 15,000 in view of favorable water-repellency of the textile product to be obtained.

Commercially available products of the polycarboxylic acid-based polymer can be used, including "NEOCRYSTAL 770" (trade name, manufactured by NICCA CHEMICAL CO., LTD.) and "CELLOPOL PC-300" (trade name, manufactured by Sanyo Chemical Industries, Ltd.).

Examples of the compound having -O-P(O) (OX¹)(OX²) as described above include phosphate ester compounds represented by the following general formula: 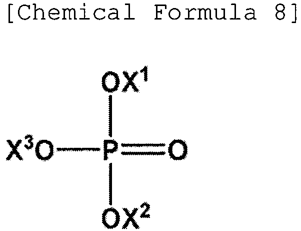 wherein, X¹ or X² is the same as defined above, and X³ represents an alkyl group having 1 to 22 carbon atoms.

As the aforementioned phosphoric acid ester compound, phosphoric acid monoesters, diesters and triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, commercially available products such as PHOSPHANOL ML-200 (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by JIKKYO SHUPPAN CO., LTD., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese; Comprehensive guide to dyeing and finishing machines) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The Drying method are not limited, and either a dry heat method or a wet heat method may be employed. Drying temperatures are also not limited, and for example, drying may be carried out at room temperature to 200°C for 10 seconds to several days. Heat treatment at a temperature of 100 to 180°C for about 10 seconds to 5 minutes may be carried out after the drying, as necessary.

In a case in which the textile material is those to be dyed, treatment with the pretreatment liquid may be carried out either before dyeing or in the same bath as in dyeing. However, in a case in which reduction soaping is carried out, there is a risk that the compounds having the aforementioned specific functional groups (for example, phenolic polymer compounds and the like) adsorbed may drop off in the course, and therefore, the treatment with the pretreatment liquid is preferably carried out following the reduction soaping after the dyeing.

The treatment temperature in the dip treatment can be 60 to 130°C. The treatment time can be 5 to 60 minutes.

The step of introducing the functional group by the pretreatment liquid is preferably treatment such that the amount of the adhering compound having the aforementioned specific functional group is 1.0 to 7.0 parts by mass, per 100 parts by mass of the fiber material. Within this range, both durable water-repellency and texture can be achieved at a high level.

The pH of the pretreatment liquid is preferably adjusted to 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salt that can be used include sodium chloride, sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the favorable texture. The functional group-containing fibers to be obtained are preferably sufficiently dried before contacting them with the hydrocarbon-based water-repellent agent.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of -100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

The embodiments have been described above, however, it will be understood that various changes can be made in the forms and details without departing from the gist and scope of the claims.

### Examples

Hereinbelow, Examples of the present disclosure will be specifically illustrated; however, Examples do not restrict the present disclosure.

### [Water-Repellency Test]

The treated test fabric was evaluated for water-repellency by the spray method according to the JIS-L-1092 (AATCC-22).

The water-repellency was evaluated according to the following criteria. The higher the score, the more favorable the water-repellency.

100: No wet or water droplets adhered were observed on the front surface.
90: No wet but small water droplets adhered were observed on the front surface.
80: Wet in the form of separate small water droplets was observed on the front surface.
70: Wet was observed on half of the front surface and the permeation of separate small wet into the fabric, was observed.
50: Wet was observed on the entire front surface.
0: Wet was observed on the entire front surface and the entire back surface.

### [Slipperiness]

The test fabric was tested for a warp sliding at a load of 160 N in accordance with ISO 13936-2, and a seam sliding (mm) was measured. The smaller the seam sliding value, the better the slip resistance.

### [Chalk Mark Resistance]

Each test fabric was placed on a flat surface, the front side of the test fabric was lightly scratched with a fingernail, and chalk mark-like traces left behind by the fingernail were visually evaluated. The evaluation criteria are as follows. The results are shown in Table 5.
O: Almost no traces are visible. OΔ: Shallow traces are visible. Δ: Traces are visible. ΔX: Deep traces are slightly visible. X: Deep traces are visible.

### [Preparation of Raw Material]

### (Production Example of Acrylic Polymer-Containing Water-Dispersion)

### Production Example 1

A 500 ml plastic container was charged with 17 g of water-soluble glycol-based solvent as an organic solvent, 110 g of pure water as a liquid medium, 60 g of stearyl acrylate as a long chain aliphatic hydrocarbon group-containing (meth)acrylate, 0.6 g of cationic emulsifier, 1 g of sorbitan fatty acid ester as a surfactant, and 4.4 g of polyoxyethylene alkyl ether, the mixture was heated to 80°C, stirred with a homomixer at 2,000 rpm for 1 minute, and then emulsified and dispersed with ultrasonic waves for 15 minutes.

Next, this emulsified dispersion was transferred to a 500 cc four-necked flask equipped with a nitrogen inlet tube, thermometer, stirring rod, and reflux tube, and after nitrogen substitution, 0.1 g of lauryl mercaptan was charged and stirred, and then 0.6 g of an azo group-containing water-soluble initiator was added, raised to 60°C and reacted for 4 hours to obtain an aqueous dispersion of a polymer. Thereafter, pure water was added to prepare a water dispersion 1 with a concentration of non-volatile content of 30%.

### Production Example 2

Each water dispersion 2 containing an acrylic polymer, a surfactant, and a liquid medium were prepared in the same manner as in the Production Example 1, except that the compounding formulation was changed according to Table 1.

### Production Example 3

A 500 ml plastic container was charged with 30 g of a water-soluble glycol-based solvent as the organic solvent, 180 g of pure water as the liquid medium, 40 g of stearyl acrylate as the long-chain aliphatic hydrocarbon group-containing (meth)acrylate, 2 g of a cationic emulsifier, 2 g of a sorbitan fatty acid ester, and 6 g of a polyoxyethylene alkyl, as the surfactants, heated to 60°C, stirred at 2,000 rpm for 1 minute with a homomixer, and then emulsified and dispersed with ultrasonic waves for 15 minutes.

Next, the emulsified dispersion was transferred to a 500 ml autoclave, and after nitrogen substitution, 0.2 g of lauryl mercaptan as the chain transfer agent, and 20 g of vinyl chloride were charged. Furthermore, 1 g of an azo-containing water-soluble initiator was added, raised to 60°C and reacted for 4 hours to obtain an aqueous dispersion of a polymer. This dispersion was further diluted with pure water to prepare a water dispersion 3 with a concentration of non-volatile content of 30%.

### Production Example 4

A water dispersion 4 containing the acrylic polymer, the surfactant, and the liquid medium was prepared in the same manner as in Production Example 3, except that the compounding formulation was changed according to Table 1.

**[Table 1]**

| | Production Example 1 | Production Example 2 | Production Example 3 | Production Example 4 |
|---|---|---|---|---|
| Stearyl acrylate | 60 | 30 | 80 | 24 |
| Stearyl group-containing amide acrylate | | 30 | | 24 |
| Vinyl chloride | | | 20 | 12 |
| Azo group-containing water-soluble initiator | 0.6 | 0.6 | 1 | 1 |
| Lauryl mercaptan | 0.1 | 0.1 | 0.2 | 0.2 |
| Water-soluble glycol-based solvent | 17 | 17 | 30 | 30 |
| Cationic emulsifier | 0.6 | 0.6 | 2 | 2 |
| Sorbitan fatty acid ester | 1 | 1 | 2 | 2 |
| Polyoxyethylene alkyl ether | 4.4 | 4.4 | 6 | 6 |
| Pure water | 110 | 110 | 180 | 120 |

| | | | | |
|---|---|---|---|---|
| The values in the table denote the amounts charged (g). | | | | |

### Production Example 5

A 500 ml plastic container was charged with 5 g of a water-soluble glycol-based solvent as the organic solvent, 110 g of pure water as the liquid medium, 50 g of KF-945 (manufactured by Shin-Etsu Chemical Co., Ltd.) as the polyether-modified polydimethylsiloxane, 4 g of a cationic emulsifier, 4 g of a sorbitan fatty acid ester, and 2.7 g of a polyoxyethylene alkyl ether as the surfactants, heated to 80°C, stirred at 2,000 rpm for 1 minute with a homomixer, and then emulsified and dispersed with ultrasonic waves for 15 minutes. This dispersion was further diluted with pure water to prepare a water dispersion 5 with a concentration of non-volatile content of 30%.

**[Table 2]**

| | **Production Example 5** |
|---|---|
| **KF-945** | **50** |
| **Water-soluble glycol-based solvent** | **5** |
| **Cationic emulsifier** | **4** |
| **Sorbitan fatty acid ester** | **4** |
| **Polyoxyethylene alkyl ether** | **2.7** |
| **Pure water** | **110** |

| | |
|---|---|
| The values in the table denote the amounts charged (g). | |

### Comparative Production Example 1

A five-necked flask equipped with a nitrogen inlet tube, thermometer, stirring rod, reflux tube, and dropping funnel was charged with 120 g of pure water as the aqueous medium and 1 g of CATIOGEN (registered trademark) TML as the surfactant and raised to 80°C to prepare a mixture. The resulting mixture was kept at 80°C, and in the mixture, 10 g of a 3% by mass aqueous solution of AAPH (2,2'-azobis(2-methylpropionamidine)dihydrochloride) was added as the polymerization initiator to prepare a solution for polymerization initiation.

Meanwhile, a 1,000 ml plastic container was added with 320 g of 2-ethylhexyl acrylate, 70 g of methyl methacrylate, 10 g of acrylamide, 420 g of pure water as the aqueous medium, and 15 g of CATIOGEN (registered trademark) TML as the surfactant, which were mixed using a homomixer and emulsified to produce a mixed emulsion.

Then, with the temperature inside the five-necked flask containing the solution for polymerization initiation maintained at 80°C, the mixed emulsion and 44 g of a 3% by mass aqueous solution of AAPH (2,2'-azobis(2-methylpropionamidine)dihydrochloride) as the polymerization initiator were simultaneously and continuously dropped from the funnel into the solution for polymerization initiation over three hours while stirring, to carry out emulsion polymerization.

After completion of dropwise addition, the temperature inside the five-necked flask was maintained at 80°C for one hour while stirring the contents inside the four-necked flask. Thereafter, the five-necked flask was started being cooled under stirring of the contents inside the five-necked flask, and the temperature inside the five-necked flask was cooled to 30°C. The above steps yielded a comparative water dispersion 1.

### Comparative Production Example 2

A comparative water dispersion 2 was prepared in the same manner as in Comparative Production Example 1, except that the compounding formulation was changed according to Table 3.

**[Table 3]**

| | **Comparative Production Example 1** | **Comparative Production Example 2** |
|---|---|---|
| **2-Ethylhexyl acrylate** | **320** | **280** |
| **Methyl methacrylate** | **70** | **70** |
| **Acrylamide** | **10** | **10** |
| **Polydimethylsiloxane having an ethylenic unsaturated group** | | **40** |
| **CATIOGEN TML** | **16 (4.8)** | **16 (4.8)** |
| ***The values inside the parentheses denote the amount of active ingredient** | | |
| **A 3% by mass aqueous solution of AAPH** | **54 (1.6)** | **54 (1.6)** |
| ***The values inside the parentheses denote the amount of active ingredient** | | |
| **Pure water** | **540** | **540** |

| | | |
|---|---|---|
| The values in the table denote the amounts charged (g). | | |

### Example 1

A mixture of the water dispersion 1 with a concentration of non-volatile content of 30% prepared in Production Example 1 and KF-640 (manufactured by Shin-Etsu Chemical Co., Ltd. with a concentration of non-volatile content of 100%) as the polyether-modified polydimethylsiloxane was prepared so that a weight ratio of non-volatile content was 86:14, and the mixture was further diluted with tap water to prepare a treatment liquid with a concentration of non-volatile content of 0.9%. A polyester fabric, nylon fabric, cotton fabric, and polyester/spandex fabric were immersed in this treatment liquid, and then squeezed with a wringer. This treated fabric was passed through a pin tenter at 170°C for 1 minute, dried, and cured. Water-repellency of the test fabric treated in this manner was evaluated using a water-repellency test by the spray method of JIS L-1092. The results of water-repellency are shown in Table 4.

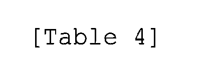

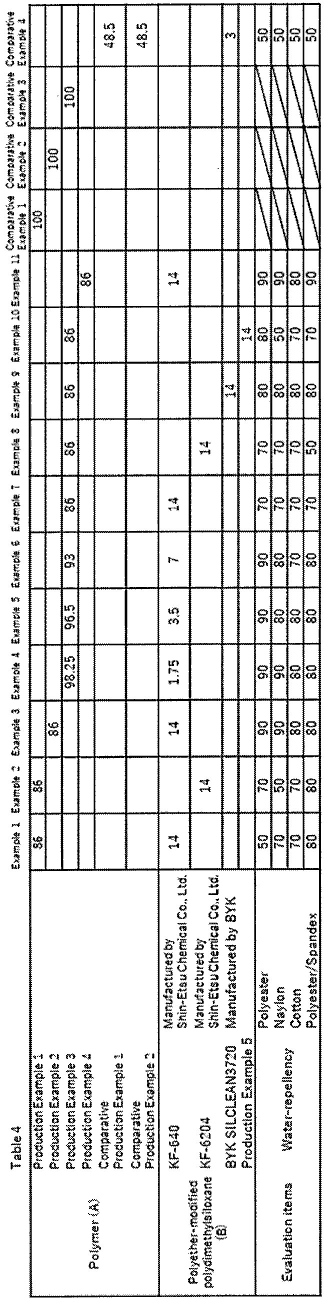

### Examples 2 to 11

Each treatment liquid with a concentration of non-volatile content of 0.9% was prepared in the same manner as in Example 1, except that the compounding formulation was changed according to Table 4. The fabrics were treated with this treatment liquid in the same manner as in Example 1, and the water-repellency test was performed using this treatment liquid. The results are shown in Table 4.

### Comparative Examples 1 to 4

Each treatment liquid with a concentration of non-volatile content of 0.9% was prepared in the same manner as in Example 1, except that the compounding formulation was changed according to Table 4. The fabrics were treated with this treatment liquid in the same manner as in Example 1, and the water-repellency test was performed using this treatment liquid. The results are shown in Table 4.

### Examples 11 to 21 and Comparative Examples 5 to 8

Each treatment liquid was prepared in the same manner as in Examples 1 to 11 and Comparative Examples 1 to 4, except that the concentration of non-volatile content was diluted to 1.5%. A polyester fabric and nylon fabric were immersed in this treatment liquid and then squeezed with a wringer. The treated fabrics were passed through a pin tenter at 170°C for 1 minute, dried and cured. The treated test fabrics were subjected to the above-described chalk mark test and seam sliding test. The results of water-repellency are shown in Table 5.

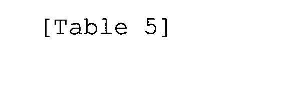

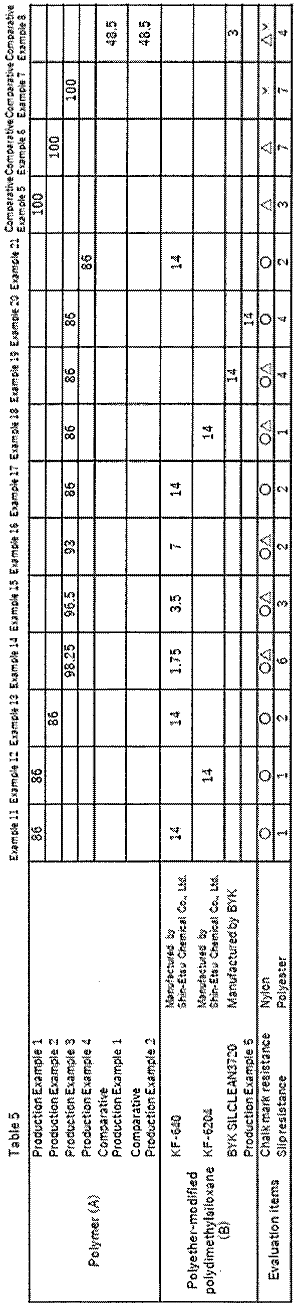

The embodiments have been described above, however, it will be understood that various changes can be made in the forms and details without departing from the gist and scope of the claims.

## Claims

1. A water-repellent composition comprising:
a polymer (A),
a polyether-modified polydimethylsiloxane (B), and
an aqueous medium (C), wherein
the polymer (A) is a polymer comprising a repeating unit derived from a monomer (a1) represented by the following formula:
CH₂=C(-R¹¹)-C(=O)-O-R¹²
wherein R¹¹ is a hydrogen atom or a methyl group, and R¹² is a hydrocarbon group having 9 to 40 carbon atoms.

2. The water-repellent composition according to claim 1, wherein in the monomer (a1), R¹² is a hydrocarbon group having 10 to 30 carbon atoms.

3. The water-repellent composition according to claim 2, wherein the polymer (A) comprises a repeating unit derived from stearyl acrylate as the monomer (a1).

4. The water-repellent composition according to claim 1, wherein the polymer (A) is a copolymer comprising a repeating unit derived from the monomer (a1) and a repeating unit derived from a monomer (a2) different from the monomer (a1).

5. The water-repellent composition according to claim 4, wherein the polymer (A) comprises a repeating unit derived from stearyl acrylate as the monomer (a1) and a repeating unit derived from a stearyl group-containing amide acrylate as the monomer (a2).

6. The water-repellent composition according to claim 4, wherein the polymer (A) comprises a repeating unit derived from stearyl acrylate as the monomer (a1) and a repeating unit derived from vinyl chloride as the monomer (a2).

7. The water-repellent composition according to claim 4, wherein the polymer (A) comprises a repeating unit derived from stearyl acrylate as the monomer (a1), and a repeating unit derived from a stearyl group-containing amide acrylate and a repeating unit derived from vinyl chloride as the monomer (a2).

8. The water-repellent composition according to claim 1, comprising 0.10 to 30 parts by mass of the polyether-modified polydimethylsiloxane (B) per 100 parts by mass of the polymer (A).

9. The water-repellent composition according to claim 1, wherein the polyether-modified polydimethylsiloxane (B) comprises at least one constituent unit based on ethylene oxide or propylene oxide.

10. The water-repellent composition according to claim 1, further comprising a surfactant.

11. The water-repellent composition according to claim 10, wherein the surfactant comprises a nonionic surfactant.

12. A method for producing the water-repellent composition according to claim 1, comprising reacting the monomer (a1) in the aqueous medium (C) containing the monomer (a1) and the polyether-modified polydimethylsiloxane (B) to obtain the polymer (A).

13. A method for producing the water-repellent composition according to claim 4, comprising reacting the monomer (a1) with the monomer (a2) in the aqueous medium (C) containing the monomer (a1), the monomer (a2), and the polyether-modified polydimethylsiloxane (B) to obtain the polymer (A).

14. A method for producing a textile product, comprising applying the water-repellent composition according to any one of claims 1 to 11 to a fibrous substrate.

15. The method for producing a textile product according to claim 14, comprising, before applying the water-repellent composition to the fibrous substrate, imparting to fibers one or more functional groups selected from the group consisting of
a monovalent group represented by -SO₃M¹, wherein M¹ represents a monovalent cation,
a monovalent group represented by -COOM², wherein M² represents a monovalent cation, and
a monovalent group represented by -O-P(O) (OX¹)(OX²), wherein X¹ and X² each independently represent a hydrogen atom or an alkyl group having 1 to 22 carbon atoms.

16. A textile product to which the polymer (A) and the polyether-modified polydimethylsiloxane (B) in the water-repellent composition according to any one of claims 1 to 11 are adhered.

17. The textile product according to claim 16 to which a compound having one or more functional groups selected from the group consisting of
a monovalent group represented by -SO₃M¹, wherein M¹ represents a monovalent cation,
a monovalent group represented by -COOM², wherein M² represents a monovalent cation, and
a monovalent group represented by -O-P(O)(OX¹)(OX²), wherein X¹ and X² each independently represent a hydrogen atom or an alkyl group having 1 to 22 carbon atoms, is adhered.
